# EUROPEAN PATENT SPECIFICATION

(11) **EP 4 586 351 B1**
(45) Date of publication and mention of the grant of the patent: **28.10.2026**
(21) Application number: 25151134.1
(22) Date of filing: 10.01.2025
(51) Int. Cl.: H01M 10/04, H01M 10/0587, H01M 10/42

(54) **SECONDARY BATTERY MANUFACTURING SYSTEM AND METHOD FOR TRACKING A SECONDARY BATTERY MANUFACTURING PROCESS**
SYSTEM ZUR HERSTELLUNG EINER SEKUNDÄRBATTERIE UND VERFAHREN ZUR VERFOLGUNG EINES VERFAHRENS ZUR HERSTELLUNG EINER SEKUNDÄRBATTERIE
SYSTÈME DE FABRICATION DE BATTERIE SECONDAIRE ET PROCÉDÉ DE SUIVI D'UN PROCESSUS DE FABRICATION DE BATTERIE SECONDAIRE

(30) Priority: 12.01.2024 KR 20240005395; 24.12.2024 KR 20240195586
(43) Date of publication of application: 16.07.2025
(60) Divisional application: 26205265.7
(73) Proprietor: LG Energy Solution, Ltd., Seoul 07335 (KR)
(72) Inventor: LEE, Hee Won, 34122 Daejeon (KR); PARK, Kyoung Chan, 34122 Daejeon (KR); PARK, Yeong Heon, 34122 Daejeon (KR); KIM, Jeong Jin, 34122 Daejeon (KR); HAN, Hyung Wook, 34122 Daejeon (KR); LEE, Seok Hun, 34122 Daejeon (KR); JANG, Seong Won, 34122 Daejeon (KR); KIM, Min Su, 34122 Daejeon (KR); JUNG, Tae Kwang, 34122 Daejeon (KR)
(74) Representative: BCKIP Part mbB

(56) References cited:
- EP-A1- 4 266 394
- EP-A2- 4 507 047
- CN-A- 107 093 761

## Description

### CROSS-REFERENCE TO RELATED APPLICATION

This application claims priority to Korean Patent Application No. 10-2024-0005395 filed on January 12, 2024, and Korean Patent Application No. 10-2024-0195586 filed on December 24, 2024.

### TECHNICAL FIELD OF THE INVENTION

The present invention relates to a secondary battery manufacturing system and a method for tracking a secondary battery manufacturing process.

### BACKGROUND

A secondary battery, unlike a primary battery, can be charged and discharged multiple times. The secondary battery is widely used as an energy source for various wireless devices such as a handset, a notebook computer, and a wireless vacuum cleaner. Recently, as the manufacturing cost per unit capacity of the secondary battery decreases dramatically due to improvements in energy density and economies of scale and the driving range of a battery electric vehicle (BEVs) increases to the same level as that of a fuel vehicle, the primary use of secondary battery is shifting from mobile devices to mobility.

The secondary battery is manufactured through an electrode process, an assembly process, and an activation process. In order to improve the yield and reliability of a secondary battery manufacturing process, securing traceability of the secondary battery manufacturing process is needed. Accordingly, various studies are being conducted to secure traceability of the secondary battery manufacturing process.

KR 2023-0112517 A discloses an apparatus for marking a code in a notching facility and recognizing the marked code and an integrated secondary battery cell management system.

CN 107093761 A discloses a process of manufacturing a battery module, wherein each of a plurality of battery cells is provided with an identification code (ID). The ID of each battery cell is scanned, and each cell is set into a receiving hole on a holding tray on which a separate identification code is marked. The ID of each cell and the coordinate position of each battery cell in the tray are uploaded to a server, so that the ID of each battery cell and its coordinate position in the material tray are associated.

### SUMMARY OF THE INVENTION

It is an object of the present invention to provide improved solutions for tracking a secondary battery manufacturing process.

To this end, the present invention provides a method in accordance with claim 1 and a system in accordance with claim 15.

A method for tracking a secondary battery manufacturing process includes a plurality of sub-processes involving a respective semi-finished cell, wherein the plurality of sub-processes includes at least one sub-process in which a semi-finished cell is placed in a holder. The method may comprise: obtaining a cell ID identifying the semi-finished cell; obtaining a holder ID identifying the holder in which the semi-finished cell is placed in a respective sub-process; and associating the cell ID with the holder ID.

The cell ID may include a virtual ID reflecting data on the semi-finished cell.

The semi-finished cell may be a jelly roll (JR) including a positive electrode (PS), a negative electrode (NS), and a separator (SS) that are wound with the separator (SS) interposed between the positive and the negative electrode (PS, NS).

A first sub-process of the plurality of sub processes may be a process of loading the jelly roll (JR) placed on a tray onto a first carrier. Obtaining the cell ID may include generating a jelly roll ID identifying the jelly roll (JR) in the first sub-process based on a tray ID that identifies the tray detected by reading a code object of the tray.

Generating the jelly roll ID may further include loading, from a database storing an electrode lot ID and an electrode count in association with a respective tray ID, an electrode lot ID and an electrode count of the jelly roll (JR) corresponding to the identification of the tray ID. The jelly roll ID may be generated further based on the electrode lot ID, the electrode count, and the position of the jelly roll (JR) on the tray.

The method may further comprise: associating roll map data on at least one electrode included in the semi-finished cell with the cell ID. The roll map data may include data on an electrode manufacturing process in which the electrode included in the semi-finished cell has been manufactured.

During a second sub-process of the plurality of sub-processes, the semi-finished cell may be placed on a second carrier which at least temporarily forms the holder. Obtaining the holder ID may include obtaining a second carrier ID identifying the second carrier.

The second sub-process may be a process of loading the semi-finished cell into the second carrier, and combining the semi-finished cell loaded into the second carrier with a lower insulator. Obtaining the second carrier ID may include detecting the second carrier ID by reading a code object of the second carrier. Associating the cell ID with the holder ID may include associating the cell ID with the second carrier ID.

During a first sub-process of the plurality of sub-processes, the semi-finished cell may be placed on a first carrier which at least temporarily forms the holder. Obtaining the holder ID may include obtaining a first carrier ID identifying the first carrier.

The first sub-process may be performed before the second sub-process. Associating the cell ID with the second carrier ID may include associating the cell ID with the first carrier ID and associating the first carrier ID and the second carrier ID.

The method may further comprise: identifying the first carrier ID by reading a code object of the first carrier during the second sub-process; capturing a first time at which the first carrier ID is identified during the second sub-process; and capturing a second time at which the second carrier ID is identified during the second sub-process. In the step of associating the first carrier ID and the second carrier ID, a time interval between the first and the second time may be further associated.

During a third sub-process of the plurality of processes, the semi-finished cell may be inserted into a cell case (CC) or a pouch, the cell case (CC) or the pouch forming the holder at least temporarily during the third sub-process. According to the invention, obtaining the holder ID includes obtaining a can ID identifying the cell case (CC) or the pouch.

Further, associating the cell ID with the holder ID includes associating the cell ID with the can ID. The second sub-process may be performed before the third sub-process. Associating the cell ID with the can ID may include associating the second carrier ID and the can ID.

The method may further comprise: identifying the second carrier ID by reading the code object assigned to the second carrier during the third sub-process; capturing a third time at which the second carrier ID is identified during the third sub-process; and capturing a fourth time at which the can ID is identified during the third sub-process. In the step of associating the second carrier ID and the can ID, a time interval between the third and the fourth time be may further associated.

The method may further comprise: acquiring process data on at least one of the second or the third sub-process; and associating the holder ID and the process data of the at least one of the second or the third sub-process.

A secondary battery manufacturing system comprises: a plurality of sub-facilities configured to perform a respective one of a plurality of sub-processes of a secondary battery manufacturing process; one or more control units including a memory and a processor. The memory may store program instructions that, when executed by the processor, configure the processor to carry out the method according to the present invention while one of the plurality of sub-processes is performed by one of the plurality of sub-facilities.

The plurality of sub-facilities may include a first sub-facility configured to perform a first sub-process among the plurality of sub-processes. The first sub-process may be a process of loading a jelly roll (JR) placed on a tray onto a first carrier. The first sub-facility may be further configured to read a code object of the tray and/or to detect a position of the jelly roll (JR) on the tray and/or to read a code object of the first carrier.

The plurality of sub-facilities may include a second sub-facility configured to perform a second sub-process among the plurality of sub-processes. During the second sub-process, the semi-finished cell may be placed on a second carrier which at least temporarily forms the holder. The second sub-facility may be further configured to read a code object of the first carrier and/or a code object of the second carrier.

The plurality of sub-facility may include a third sub-facility configured to perform a third sub-process among the plurality of sub-processes. During the third sub-process, the semi-finished cell may be inserted into a cell case (CC), the cell case (CC) forming the holder at least temporarily during the third sub-process. The third sub-facility may be further configured to read a code object of the cell case (CC) and/or a code object of the second carrier.

The secondary battery manufacturing system may further comprise: a control unit which includes: at least one processor forming a first controller configured to process data obtained from a first group of sub-facilities including a first number of sub-facilities among the plurality of sub-facilities; and at least one processor forming a second controller configured to process data obtained from a second group of sub-facilities including a second number of sub-facilities among the plurality of sub-facility.

The present invention may further include the following emebodiments:

A cell tracking method according to the present invention may include obtaining a cell ID corresponding to a semi-finished cell, obtaining a holder ID corresponding to a holder in which the semi-finished cell is placed, and matching the cell ID and the holder ID.

In the cell tracking method according to the present invention, the cell ID may be a virtual ID generated using data related to the semi-finished cell.

In the cell tracking method according to the present invention, the semi-finished cell may be a jelly roll, which is a structure wound with a positive electrode, a negative electrode, and a separator sheet interposed therebetween, and the obtaining of the cell ID may include generating a jelly roll ID corresponding to the jelly roll based on a first sub-process included in a secondary battery manufacturing process.

In the cell tracking method according to the present invention, the first sub-process may be a process of loading the jelly roll placed on a tray onto a first carrier, the generating the jelly roll ID may include identifying a tray ID by detecting a code object of the tray, and generating the jelly roll ID based on the tray ID.

In the cell tracking method according to the present invention, the generating of the jelly roll ID may include loading an electrode lot ID and electrode count of the jelly roll based on the identification of the tray ID, determining a tray coordinate of the jelly roll on the tray, and generating the jelly roll ID further based on the electrode lot ID, the electrode count, and the tray coordinate.

The cell tracking method according to the present invention may further include obtaining a roll map of the semi-finished cell based on an electrode manufacturing process included in the secondary battery manufacturing process, and matching the roll map and the cell ID.

In the cell tracking method according to the present invention, the holder may be a carrier on which the semi-finished cell is placed during the secondary battery manufacturing process, and the obtaining of the holder ID may include obtaining a carrier ID corresponding to the carrier based on a second sub-process included in the secondary battery manufacturing process.

In the cell tracking method according to the present invention, the second sub-process may be a process of loading the semi-finished cell into a second carrier, and combining the semi-finished cell loaded into the second carrier with a lower insulator, the obtaining of the carrier ID may include identifying a second carrier ID by detecting a code object of the second carrier, and the matching of the cell ID and the holder ID may include matching the cell ID and the second carrier ID.

The cell tracking method according to the present invention may further include matching a first carrier ID corresponding to a first carrier onto which the semi-finished cell is loaded and the cell ID, based on a first sub-process included in a secondary battery manufacturing process, and the matching of the cell ID and the second carrier ID may include matching the first carrier ID and the second carrier ID, and the first sub-process may be performed before the second sub-process is performed.

The cell tracking method according to the present invention may further include identifying the first carrier ID by detecting the code object of the first carrier based on the second sub-process, and the of matching of the first carrier ID and the second carrier ID may include matching the first carrier ID and the second carrier ID based on a first time at which the first carrier ID is identified based on the second sub-process and a second time at which the second carrier ID is identified based on the second sub-process.

The cell tracking method according to the present invention may further include obtaining process data corresponding to the second sub-process targeting the semi-finished cell, and mapping the carrier ID and the process data.

In the cell tracking method according to the present invention, the holder may be a cell case into which the semi-finished cell is inserted during the secondary battery manufacturing process, and the obtaining of the holder ID may include detecting a code object of the cell case based on a third sub-process included in the secondary battery manufacturing process.

In the cell tracking method according to the present invention, the obtaining of the holder ID may include identifying a can ID corresponding to the cell case by detecting the code object of the cell case.

The cell tracking method according to the present invention may further include matching a second carrier ID corresponding to a second carrier onto which the semi-finished cell is loaded and the cell ID based on a second sub-process included in a secondary battery manufacturing process, and the matching of the cell ID and the can ID may include matching the second carrier ID and the can ID, and the second sub-process may be performed before the third sub-process is performed.

The cell tracking method according to the present invention may further include identifying the second carrier ID by detecting a code object of the second carrier based on the third sub-process, and the matching of the second carrier ID and the can ID may include matching the second carrier ID and the can ID based on a third time at which the second carrier ID is identified based on the third sub-process and a fourth time at which the can ID is identified based on the third sub-process.

The cell tracking method according to the present invention may further include obtaining process data corresponding to the third sub-process targeting the semi-finished cell, and matching the holder ID and the process data.

In the cell tracking method according to the present invention, the third sub-process may be a process of inserting the semi-finished cell into the cell case.

In the cell tracking method according to the present invention, the third sub-process may include at least one of an electrode tab welding process, a cell case forging process, an upper insulator insertion process, a beading process, an electrolyte injection process, a crimping process, and a cleaning process.

A secondary battery manufacturing system according to the present invention may include a plurality of pieces of sub-equipment configured to perform a plurality of sub-processes included in a secondary battery manufacturing process, and at least one controller configured to process cell tracking data obtained from the plurality of pieces of sub-equipment, in which the at least one controller may be configured to obtain a cell ID corresponding to a semi-finished cell based on the cell tracking data, obtain a holder ID corresponding to a holder in which the semi-finished cell is placed based on the cell tracking data, and match the cell ID and the holder ID.

In the secondary battery manufacturing system according to the present invention, the cell ID may be a virtual ID generated using data related to the semi-finished cell.

In the secondary battery manufacturing system according to the present invention, the semi-finished cell may be a jelly roll, which is a structure wound with a positive electrode, a negative electrode, and a separator sheet interposed therebetween, the plurality of pieces of sub-equipment may include a first sub-equipment configured to a first sub-process among the plurality of sub-processes, and the at least one controller may be configured to obtain first cell tracking data from the first sub-equipment, and generate a jelly roll ID corresponding to the jelly roll based on the first cell tracking data.

In the secondary battery manufacturing system according to the present invention, the first sub-process may be a process of loading the jelly roll placed on a tray into a first carrier, the first sub-equipment may identify a tray ID by detecting a code object of the tray, the tray ID being included in the first cell tracking data, and the at least one controller may be configured to generate the jelly roll ID based on the tray ID.

In the secondary battery manufacturing system according to the present invention, the first sub-equipment may be configured to load an electrode lot ID and electrode count of the jelly roll based on the identification of the tray ID, and the electrode lot ID, the electrode count being included in the first cell tracking data, a tray coordinate on the tray of the jelly roll is determined, the tray coordinate being included in the first cell tracking data, and the at least one controller may be configured to generate the jelly roll ID further based on the electrode lot ID, the electrode count, and the tray coordinate.

In the secondary battery manufacturing system according to the present invention, the holder may be a carrier on which the semi-finished cell is placed during the secondary battery manufacturing process, the plurality of pieces of sub-equipment may include a second sub-equipment configured to perform a second sub-process among the plurality of sub-processes, and the at least one controller may be configured to obtain second cell tracking data from the second sub-equipment, and obtain a carrier ID corresponding to the carrier based on the second cell tracking data.

In the secondary battery manufacturing system according to the present invention, the second sub-process may be a process of loading the semi-finished cell into a second carrier, and combining the semi-finished cell loaded into the second carrier with a lower insulator, the second sub-equipment may be configured to identify the second carrier ID by detecting a code object of the second carrier, the second carrier ID being included in the second cell tracking data, and the at least one controller may be configured to match the cell ID and the second carrier ID.

In the secondary battery manufacturing system according to the present invention, the plurality of pieces of sub-equipment may include a first sub-equipment configured to perform a first sub-process among the plurality of sub-processes, the first sub-equipment may be configured to identify a first carrier ID by detecting a code object of a first carrier onto which the semi-finished cell is loaded, the at least one controller may be configured to match the cell ID and the second carrier ID by matching the cell ID and the first carrier ID and matching the first carrier ID and the second carrier ID, and the first sub-process may be performed before the second sub-process is performed.

In the secondary battery manufacturing system according to the present invention, the second sub-equipment may be configured to identify the first carrier ID by detecting the code object of the first carrier, the second cell tracking data may include the first carrier ID identified by the second sub-equipment, a first time at which the first carrier ID was identified by the second sub-equipment, and a second time at which the second carrier ID was identified by the second sub-equipment, and the at least one controller may be configured to match the first carrier ID and the second carrier ID based on the first time and the second time.

In the secondary battery manufacturing system according to the present invention, the at least one controller may be configured to obtain process data corresponding to the second sub-process targeting the semi-finished cell from the second sub-equipment, and map the carrier ID and the process data.

In the secondary battery manufacturing system according to the present invention, the holder may be a cell case into which the semi-finished cell is inserted during the secondary battery manufacturing process, the plurality of sub-equipment may include a third sub-equipment configured to perform a third sub-process among the plurality of sub-processes, the third sub-equipment may be configured to identify the holder ID by detecting a code object of the cell case, and the at least one controller may be configured to obtain third cell tracking data from the third sub-equipment, and obtain the holder ID based on the third cell tracking data.

In the secondary battery manufacturing system according to the present invention, the third sub-equipment may be configured to identify a can ID corresponding to the cell case by detecting the code object of the cell case, and the can ID may be included in the third cell tracking data.

In the secondary battery manufacturing system according to the present invention, the plurality of pieces of sub-equipment may include a second sub-equipment configured to perform a second sub-process among the plurality of sub-processes, the at least one controller may be configured to match a second carrier ID corresponding to a second carrier onto which the semi-finished cell is loaded and the cell ID, match the cell ID and the can ID by matching the second carrier ID and the cell ID and matching the second carrier ID and the can ID, and the second sub-process may be performed before the third sub-process is performed.

In the secondary battery manufacturing system according to the present invention, the third sub-equipment may be configured to identify the second carrier ID by detecting a code object of the second carrier, the third cell tracking data may include the second carrier ID identified by the third sub-equipment, a third time at which the second carrier ID was identified by the third sub-equipment, and a fourth time at which the can ID was identified by the third sub-equipment, and the at least one controller may be configured to match the second carrier ID and the can ID based on the third time and the fourth time.

In the secondary battery manufacturing system according to the present invention, the at least one controller may be configured to obtain process data corresponding to the third sub-process targeting the semi-finished cell from the third sub-equipment, and map the holder ID and the process data.

In the secondary battery manufacturing system according to the present invention, the third sub-process may be a process of inserting the semi-finished cell into the cell case.

In the secondary battery manufacturing system according to the present invention, the third sub-process may include at least one of an electrode tab welding process, a cell case forging process, an upper insulator insertion process, a beading process, an electrolyte injection process, a crimping process, and a cleaning process.

In the secondary battery manufacturing system according to the present invention, the at least one controller may include a first controller configured to process cell tracking data obtained from a first sub-equipment group grouped with a first number of pieces of sub-equipment among the plurality of pieces of sub-equipment, and a second controller configured to process cell tracking data obtained from a second sub-equipment group grouped with a second number of pieces of sub-equipment among the plurality of sub-equipment.

### BRIEF DESCRIPTION OF THE DRAWINGS

Exemplary embodiments can be understood in more detail from the following description taken in conjunction with the accompanying drawings, in which:
FIG. 1 is a flowchart showing a method of manufacturing a secondary battery according to exemplary embodiments;
FIG. 2 is a block diagram showing a secondary battery manufacturing system according to exemplary embodiments;
FIGS. 3 to 12 are diagrams for describing a secondary battery manufacturing method according to exemplary embodiments;
FIG. 13 is a diagram for describing a method for managing data by a secondary battery manufacturing system according to exemplary embodiments;
FIG. 14 is a diagram illustrating roll map data shown in FIG. 13;
FIG. 15 is a flowchart for describing a method of managing cell tracking data according to exemplary embodiments;
FIG. 16 is a diagram for describing a method of managing cell tracking data according to exemplary embodiments;
FIG. 17 is a diagram for describing a method of managing cell tracking data according to exemplary embodiments;
FIG. 18 is a flowchart for describing a method of managing cell tracking data according to exemplary embodiments;
FIG. 19 is a diagram for describing a method of managing cell tracking data according to exemplary embodiments;
FIG. 20 is a diagram for describing a method of managing cell tracking data according to exemplary embodiments;
FIG. 21 is a flowchart for describing a method of managing cell tracking data according to exemplary embodiments;
FIG. 22 is a diagram for describing a method of managing cell tracking data according to exemplary embodiments;
FIG. 23 is a flowchart for describing a method of managing cell tracking data according to exemplary embodiments;
FIG. 24 is a flowchart for describing a method of managing cell tracking data according to exemplary embodiments;
FIG. 25 is a flowchart for describing a method of managing cell tracking data according to exemplary embodiments;
FIG. 26 is a flowchart for describing a method of managing cell tracking data according to exemplary embodiments;
FIG. 27 is a flowchart for describing a method of managing cell tracking data according to exemplary embodiments; and
FIG. 28 is a flowchart for describing a method of managing cell tracking data according to exemplary embodiments.

### DETAILED DESCRIPTION OF EXEMPLARY EMBODIMENTS OF THE INVENTION

Hereinafter, exemplary embodiments of the present invention will be described in detail with reference to the accompanying drawings. Prior to this description, the terms or words used in the present disclosure should not be interpreted as limited to their usual or dictionary meanings, and should be interpreted as meanings and concepts that conform to the technical idea of the present disclosure based on the principle that the inventor may appropriately define the concept of the term in order to explain his or her own invention in the best way.

Therefore, the embodiments described in the present disclosure and the configurations illustrated in the drawings are only the most exemplary embodiments of the present disclosure.

Furthermore, in describing the present invention, when it is determined that a specific description of a related known configuration or function may obscure the present invention, the detailed description thereof will be omitted.

Since the embodiments are provided to more fully explain the present invention to those skilled in the art, shapes and sizes of components in the drawings may be exaggerated, omitted, or schematically illustrated for a clearer description. Therefore, the size or ratio of each component does not entirely reflect the actual size or ratio.

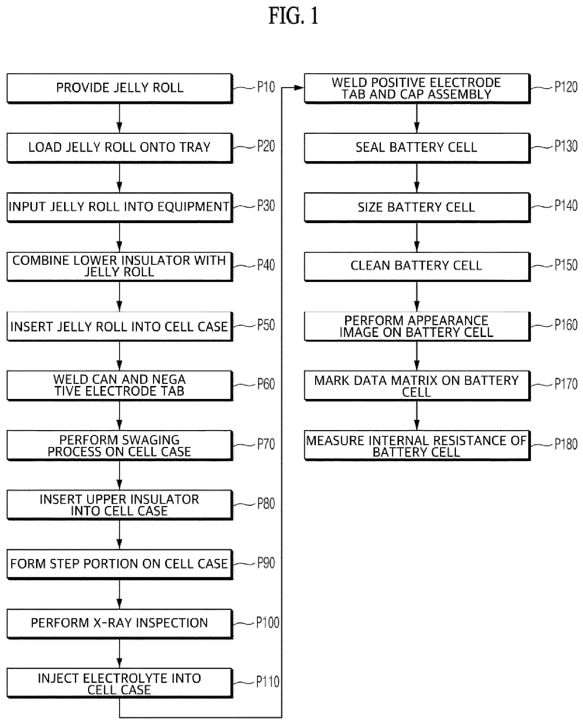

FIG. 1 is a flowchart showing a method of manufacturing a secondary battery according to exemplary embodiments.

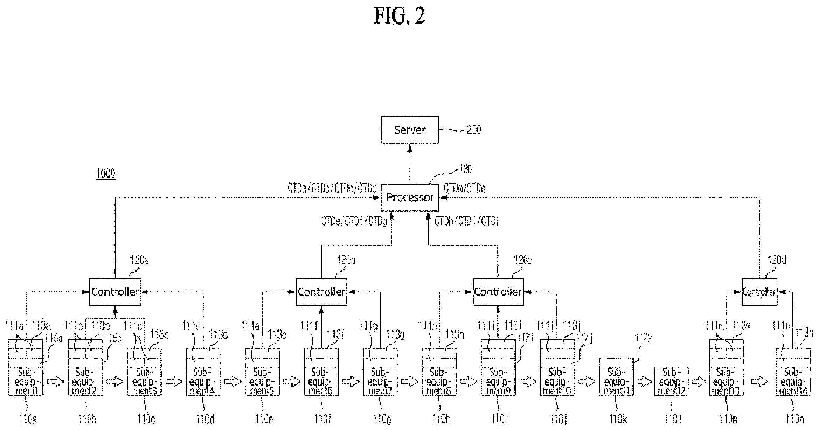

FIG. 2 is a block diagram showing a secondary battery manufacturing system 1000 according to exemplary embodiments.

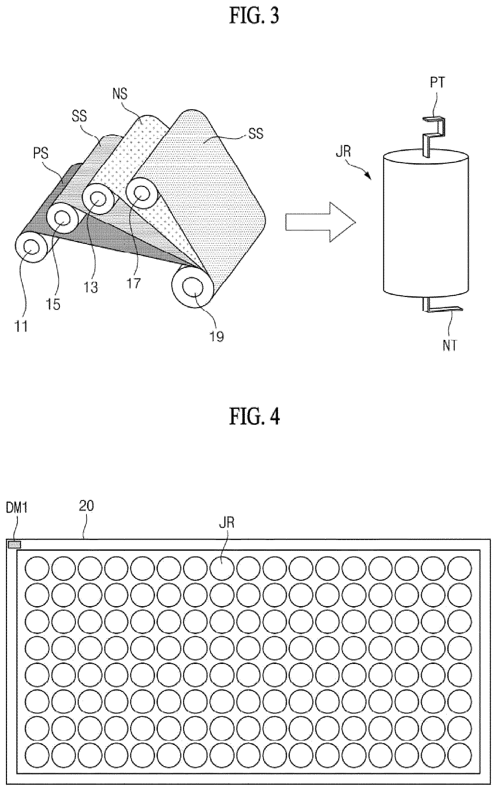

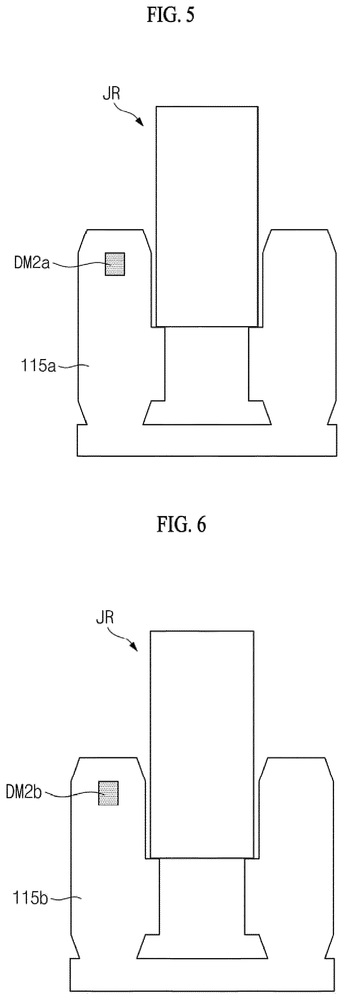

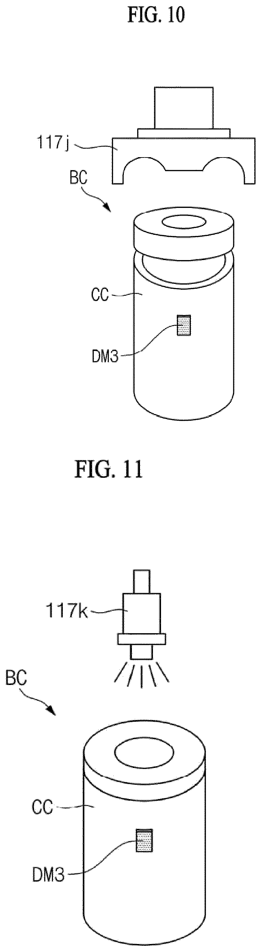

FIGS. 3 to 12 are diagrams for describing a secondary battery manufacturing method according to exemplary embodiments.

Referring to FIGS. 1 and 2, the secondary battery manufacturing system 1000 may be configured to perform a secondary battery manufacturing process. Here, the secondary battery manufacturing process may include an electrode manufacturing process, an assembly process, and an activation process of a secondary battery. According to an embodiment, the secondary battery manufacturing system 1000 may be configured to perform the assembly process of the secondary battery. For example, the secondary battery manufacturing system 1000 may be configured to perform the assembly process, e.g., of a can-type battery (for example, a prismatic battery or a cylindrical battery) or a pouch-type battery. The secondary battery manufacturing system 1000 may include a plurality of pieces of sub-equipment 110a, 110b, 110c, 110d, 110e, 110f, 110g, 110h, 110i, 110j, 110k, 110l, 110m, and 110n, controllers 120a, 120b, 120c, and 120d, a processor 130, and a server 200. The number of the plurality of pieces of sub-equipment 110a, 110b, 110c, 110d, 110e, 110f, 110g, 110h, 110i, 110j, 110k, 110l, 110m, and 110n, and the number of the controllers 120a, 120b, 120c, and 120d illustrated in FIG. 2 are for illustrative purpose, and the technical idea of the present disclosure is not limited thereto.

The secondary battery manufacturing process may include a plurality of sub-processes, and each of the plurality of pieces of sub-equipment 110a, 110b, 110c, 110d, 110e, 110f, 110g, 110h, 110i, 110j, 110k, 110l, 110m, and 110n may be configured to perform one of the sub-processes (or, one or more of the sub-processes).

The controllers 120a, 120b, 120c, and 120d may be configured to process cell tracking data obtained from the plurality of pieces of sub-equipment 110a, 110b, 110c, 110d, 110e, 110f, 110g, 110h, 110i, 110j, 110k, 110l, 110m, and 110n. More specifically, the controller 120a may be configured to process cell tracking data CTDa, CTDb, CTDc, and CTDd obtained from controllers 113a, 113b, 113c, and 113d respectively included in the pieces of sub-equipment 110a, 110b, 110c, and 110d. The controller 120b may be configured to process cell tracking data CTDe, CTDf, and CTDg obtained from controllers 113e, 113f, and 113g respectively included in the pieces of sub-equipment 110e, 110f, and 110g. The controller 120c may be configured to process cell tracking data CTDe, CTDf, and CTDg obtained from controllers 113h, 113i, and 113j respectively included in the pieces of sub-equipment 110h, 110i, and 110j. The controller 120d may be configured to process cell tracking data CTDm and CTDn obtained from controllers 113m and 113n respectively included in the pieces of sub-equipment 110m and 110n.

The number of the controllers 120a, 120b, 120c, and 120d and allocation of the controllers 120a, 120b, 120c, and 120d to the plurality of pieces of sub-equipment 110a, 110b, 110c, 110d, 110e, 110f, 110g, 110h, 110i, 110j, 110k, 110l, 110m, and 110n illustrated in FIG. 2 are for illustrative purpose, and the technical idea of the present disclosure is not limited thereto. For example, the secondary battery manufacturing system 1000 may include one controller that processes cell tracking data obtained from the plurality of pieces of sub-equipment 110a, 110b, 110c, 110d, 110e, 110f, 110g, 110h, 110i, 110j, 110k, 110l, 110m, and 110n. In this case, the controller may be configured to individually process cell tracking data obtained from each of the plurality of pieces of sub-equipment 110a, 110b, 110c, 110d, 110e, 110f, 110g, 110h, 110i, 110j, 110k, 110l, 110m, and 110n. Generally, the secondary battery manufacturing system 1000 may include a memory and one or more processors, and the memory may store program instructions, i.e., software, that configure the processor to perform various functions, e.g., the functions that are carried out by one or more of the controllers 120a, 120b, 120c, and 120d and/or the controllers 113a, 113b, 113c, and 113d as described in the following.

The controller (at least one of 120a, 120b, 120c, and 120d) may be configured to obtain a cell ID corresponding to a semi-finished cell based on the cell tracking data CTDa, CTDb, CTDc, CTDd, CTDe, CTDf, CTDg, CTDh, CTDi, CTDj, CTDm, and CTDn obtained from the plurality of pieces of sub-equipment 110a, 110b, 110c, 110d, 110e, 110f, 110g, 110h, 110i, 110j, 110k, 110l, 110m, and 110n. According to an embodiment, the cell ID may be a virtual ID generated using data related to a semi-finished cell. For example, the controller (at least one of 120a, 120b, 120c, and 120d) may generate a virtual ID, for example, a jelly roll ID, of the semi-finished cell based on at least one of a tray ID, tray coordinates, an electrode lot ID, and an electrode count of a tray onto which a semi-finished cell, for example, a jelly roll, is loaded. According to an embodiment, the cell ID may be a representative ID for tracking a semi-finished cell in at least one sub-process prior to a sub-process of obtaining a holder ID which will be described below. For example, when a carrier ID corresponding to a holder ID is obtained based on process P40 of FIG. 1, a cell ID may be a jelly roll ID generated based on process P30 of FIG. 1. As another example, when a can ID corresponding to a holder ID is obtained based on process P50 of FIG. 1, the cell ID may be the jelly roll ID generated based on process P30 of FIG. 1 or the carrier ID obtained based on process P40 of FIG. 1. Generally, the cell ID identifies a respective semi-finished cell.

Here, the semi-finished cell may include various types of semi-finished cells manufactured during the manufacturing process performed on the secondary battery manufacturing system 1000. For example, in the case of a manufacturing process of a can-type battery, a semi-finished cell may be configured as a jelly roll, which is a structure wound with a positive electrode, a negative electrode, and a separator sheet interposed therebetween, or a can-type battery cell in which a jelly roll is inserted into a cell case. As another example, in the case of a pouch-type battery manufacturing process, a semi-finished cell may be configured as a pouch-type battery cell in which a unit cell composed of at least one electrode of a polarity (e.g., a positive electrode and/or a negative electrode) and a separator sheet, a stacked electrode assembly formed by stacking a plurality of unit cells, a foldable electrode assembly formed by folding a plurality of unit cells, or an electrode assembly is inserted into a pouch. For example, the unit cell may be configured as a mono cell in which the negative electrode and positive electrode are respectively positioned on the outermost sides, a bi-cell in which electrodes of the same polarity are positioned on the outermost sides, or a half cell in which the negative electrode or positive electrode is positioned between the separator sheets on the outermost sides.

The controller (at least one of 120a, 120b, 120c, and 120d) may be configured to obtain a holder ID corresponding to a holder in which a semi-finished cell is placed, based on the cell tracking data CTDa, CTDb, CTDc, CTDd, CTDe, CTDf, CTDg, CTDh, CTDi, CTDj, CTDm, and CTDn obtained from the plurality of pieces of sub-equipment 110a, 110b, 110c, 110d, 110e, 110f, 110g, 110h, 110i, 110j, 110k, 110l, 110m, and 110n.

The holder may include various types of holders in which a semi-finished cell is placed during the manufacturing process performed on the secondary battery manufacturing system 1000. For example, in the case of a can-type battery manufacturing process, the holder may be configured as a carrier 115a or 115b in which a jelly roll is placed, or a cell case in which a jelly roll is inserted. The carrier 115a or 115b may be a configuration used to hold a jelly roll in specific sub-processes P30, P40, and P50 targeting a jelly roll. The cell case may be a configuration of a cylindrical battery cell and may be a configuration in which the jelly roll is inserted in the specific sub-process P50. As another example, in the case of a pouch-type battery manufacturing process, the holder may be configured as a magazine in which unit cells are stacked, or a pouch in which unit cells are inserted. The magazine may be a configuration that holds a plurality of unit cells to be stacked or folded by stacking the plurality of unit cells before a stacking process or folding process for forming an electrode assembly by stacking or folding a plurality of unit cells, after a notching process for forming an electrode tab on an electrode sheet of a unit cell and a lamination process for bonding the unit cell to a separator sheet, during the assembly process of the pouch-type battery. A pouch is a configuration of the pouch-type battery cell and may be a configuration into which a stack cell or a folding cell is inserted in a packaging process.

The controller (at least one of 120a, 120b, 120c, and 120d) may obtain a cell ID and/or a holder ID by using various data included in the cell tracking data CTDa, CTDb, CTDc, CTDd, CTDe, CTDf, CTDg, CTDh, CTDi, CTDj, CTDm, and CTDn.

According to an embodiment, cell tracking data CTDa, CTDb, CTDc, CTDd, CTDe, CTDf, CTDg, CTDh, CTDi, CTDj, CTDm, and CTDn may include data for obtaining the cell ID and/or the holder ID. The cell tracking data CTDa, CTDb, CTDc, CTDd, CTDe, CTDf, CTDg, CTDh, CTDi, CTDj, CTDm, and CTDn may include identification data acquired or identified by detecting a code object related to the semi-finished cell and/or the holder. For example, identification data may include at least one of a tray ID identified through a code object on a tray on which a jelly roll is placed, a carrier ID identified through a code object on a carrier onto which a jelly roll is loaded, and a can ID identified through a code object on a cell case into which a jelly roll is inserted. For example, the code object may be a code image including information about an ID of a target detected and identified by a code reader (for example, a matrix reader 111a, 111b, 111c, 111d, 111e, 111f, 111g, 111h, 111i, 111j, 111m, or 111n), and may be implemented as at least one of a data matrix, a QR code, and a barcode. It is also possible that the code object is realized by an RFID tag or other electronically readable object. Hence, the code object may be an optically or electronically readable object. Hereinafter, the present invention will be described with a focus on an embodiment in which the data matrix, thus, an optically readable object, is used as the code object. However, this is for illustrative purposes only and the present invention is not limited thereto. In addition, the identification data may further include an electrode lot ID and electrode count loaded by the plurality of pieces of sub-equipment 110a, 110b, 110c, 110d, 110e, 110f, 110g, 110h, 110i, 110j, 110k, 110l, 110m, and 110n with identification of the ID as a trigger.

According to an embodiment, the cell tracking data CTDa, CTDb, CTDc, CTDd, CTDe, CTDf, CTDg, CTDh, CTDi, CTDj, CTDm, and CTDn may include time data indicating the time at which the identification data was acquired or identified. This time data may be used for matching between or associating a plurality of IDs.

The controller (at least one of 120a, 120b, 120c, and 120d) may be configured to match or associate the obtained cell ID and holder ID.

According to an embodiment, the controller (at least one of 120a, 120b, 120c, and 120d) may be configured to match the jelly roll ID corresponding to the jelly roll and the carrier ID corresponding to the carrier on which the jelly roll is placed during the secondary battery manufacturing process. For example, the controller (at least one of 120a, 120b, 120c, and 120d) may be configured to match or associate a jelly roll ID and a carrier ID based on the cell tracking data CTDa obtained from the sub-equipment 110a that performs a sub-process of loading the jelly roll placed on the tray onto the carrier 115a. Herein, the cell tracking data CTDa may include time data indicating the time at which the jelly roll ID is generated and the time at which the carrier ID is obtained or identified. The controller (at least one of 120a, 120b, 120c, and 120d) may be configured to match the jelly roll ID and the carrier ID based on the time difference between the time at which the jelly roll ID is generated and the time at which the carrier ID is obtained or identified.

The controller (at least one of 120a, 120b, 120c, and 120d) may be configured to match a plurality of carrier IDs that respectively correspond to a plurality of carriers onto which the same jelly roll is loaded between each other during the secondary battery manufacturing process. For example, the controller (at least one of 120a, 120b, 120c, and 120d) may be configured to match a first carrier ID corresponding to the carrier 115a and a second carrier ID corresponding to the carrier 115b based on the cell tracking data CTDb obtained from the sub-equipment 110b that performs a sub-process of unloading the jelly roll loaded on the carrier 115a, loading the jelly roll onto the carrier 115b, and combining the jelly roll loaded onto the carrier 115b with a lower insulator. Herein, the cell tracking data CTDb may include time data indicating a first time at which the first carrier ID is identified and a second time at which the second carrier ID is identified by the sub-equipment 110b. The controller (at least one of 120a, 120b, 120c, and 120d) may be configured to match or associate the first carrier ID and the second carrier ID based on the time difference between the first time and the second time. A buffer of the controller (at least one of 120a, 120b, 120c, and 120d) may store matching between the jelly roll ID based on the cell tracking data CTDa and the carrier ID corresponding to or identifying the carrier 115a. The controller (at least one of 120a, 120b, 120c, and 120d) may be configured to match a jelly roll ID and a carrier ID corresponding to or identifying a carrier 115b based on the matching stored in the buffer and matching between the first carrier ID and the second carrier ID based on the cell tracking data CTDb. Generally, the respective carrier ID associated with the jelly roll ID may be stored in a database. For example, the respective controller may be configured to store the carrier ID associated with jelly roll ID in the database.

The controller (at least one of 120a, 120b, 120c, and 120d) may be configured to obtain a can ID corresponding to a cell case into which a jelly roll is inserted based on the cell tracking data CTDa, CTDb, CTDc, CTDd, CTDe, CTDf, CTDg, CTDh, CTDi, CTDj, CTDm, and CTDn.

The controller (at least one of 120a, 120b, 120c, and 120d) may be configured to match or associate the jelly roll ID identifying the jelly roll and the can ID identifying the cell case into which the jelly roll is inserted during the secondary battery manufacturing process. For example, the controller (at least one of 120a, 120b, 120c, and 120d) may be configured to match or associate the carrier ID corresponding to the carrier 115b and the can ID based on the cell tracking data CTDc obtained from the sub-equipment 110c that performs a sub-process of inserting a jelly roll loaded on the carrier 115b into a cell case. For example, the cell tracking data CTDc may include time data for a third time at which the carrier ID was acquired or identified and a fourth time at which the can ID was acquired or identified by the sub-equipment 110c. The controller (at least one of 120a, 120b, 120c, and 120d) may be configured to match the carrier ID and the can ID based on a time difference between the third time and the fourth time. A buffer of the controller (at least one of 120a, 120b, 120c, and 120d) may store matching between the jelly roll ID based on cell tracking data CTDa and CTDb and the carrier ID corresponding to the carrier 115b. The controller (at least one of 120a, 120b, 120c, and 120d) may be configured to match a jelly roll ID and the can ID based on the matching stored in the buffer and matching between a carrier ID and a can ID based on the cell tracking data CTDc.

According to an embodiment, the controller (at least one of 120a, 120b, 120c, and 120d) may be configured to map the ID obtained from each sub-process and process data and/or inspection data obtained from the corresponding sub-process. Herein, the process data may include information related to the equipment that performed the corresponding process (for example, a motor load value and revolutions per minute (RPM)) and the time at which the corresponding process was performed. The inspection data may include measurement information obtained by measuring the dimensions of a semi-finished product to be inspected by scanning, an image obtained by photographing the semi-finished product to be inspected (for example, X-RAY image and vision image), and state information of the inspected semi-finished product based on at least one of the measurement information and the image. Mapping may mean storing data by linking the ID to the data so that the data that acts as the value can be referenced through the ID that acts as the key. In other words, since the ID and the process data and/or the inspection data are mapped, the process data and/or the inspection data can be referenced through the ID.

The manufacturing traceability of the secondary battery may be improved by the controller (at least one of 120a, 120b, 120c, and 120d) tracking the cell ID, process data, and inspection data of the semi-finished cells that have undergone the sub-processes of the secondary battery manufacturing system 1000 through the above-described operations.

Hereinafter, a can-type battery manufacturing process will be taken as a example of the secondary battery manufacturing process by the secondary battery manufacturing system 1000, and a method of matching at least two or more of the jelly roll ID, the carrier ID, the can ID, and the lot ID in a plurality of sub-processes included in the can-type battery manufacturing process and a method of mapping the ID and the process data will be specifically described. However, this is just an example for the convenience of description, and the cell tracking method of the present disclosure is not limited to the can-type battery manufacturing process and may also be applied to, e.g., a pouch-type battery manufacturing process.

Referring to FIGS. 1 to 3, in P10, a jelly roll JR may be provided. Providing the jelly roll JR may include winding a positive electrode sheet PS, a negative electrode sheet NS, and separator sheets SP, and cutting the positive electrode sheet PS, the negative electrode sheet NS, and the separator sheets SP so that the winding structure is separated. The positive electrode sheet PS may be unwound from a positive electrode roll by an unwinder 11, the negative electrode sheet NS may be unwound from a positive electrode roll by an unwinder 13, and the separator sheet SS may be unwound from separator sheet rolls by unwinders 15 and 17. The positive electrode sheet PS may include a positive electrode current collector and a positive electrode active material. The negative electrode sheet NS may include a negative electrode current collector and a negative electrode active material.

The thickness of the positive electrode current collector may be in the range from approximately 3 µm to approximately 500 µm. The positive electrode current collector may not cause a chemical change in the secondary battery to be finally manufactured, and may have high conductivity. The positive electrode current collector may include, for example, stainless steel, aluminum, nickel, titanium, calcined carbon, and aluminum. The positive electrode current collector may also include stainless steel surface-treated with carbon, nickel, titanium, and silver. The surface of the positive electrode current collector may include a fine uneven structure to increase the adhesion of the active material. The positive electrode current collector may have a shape such as a film, a sheet, a foil, a net, a porous material, a foam, or a nonwoven fabric.

The positive electrode active material is a material that may cause an electrochemical reaction. The positive electrode active material may be lithium transition metal oxide. The positive electrode active material may include, for example, a layered compound such as lithium cobalt oxide LiCoO₂ and lithium nickel oxide LiNiO₂ substituted with one or more transition metals, lithium manganese oxide substituted with one or more transition metals, lithium nickel-based oxide represented by a chemical formula LiNi_{1-y}M_{y}O₂ (where, M is any one of Co, Mn, Al, Cu, Fe, Mg, B, Cr, Zn, and Ga, and 0.01 ≤ y ≤ 0.7), lithium nickel cobalt manganese composite oxide represented by Li_{1+z}Ni_{b}Mn_{c}Co_{1-(b+c+d)}MₐO₍₂₋ₑ₎Aₑ such as Li_{1+z}Ni_{1/3}Co_{1/3}Mn_{1/3}O₂ or Li_{1+z}Ni_{0.4}Mn_{0.4}Co_{0.2}O₂ (where, -0.5 ≤ z ≤ 0.5, 0.1 ≤ b ≤ 0.8, 0.1 ≤ c ≤0.8, 0 ≤ d ≤ 0.2, 0≤e≤0.2, and (b + c + d) < 1, M is one of Al, Mg, Cr, Ti, Si, and Y, and A is one of F, P, and Cl), and olivine-based lithium metal phosphate represented by a chemical formula Li₁₊ₓM_{1-y}M'_{y}PO_{4-z}X_{z} (where, M is a transition metal, more specifically, one of Fe, Mn, Co, and Ni, M' is one of Al, Mg, and Ti, X is one of F, S, and N, -0.5 ≤ x ≤ +0.5, 0 ≤ y ≤ 0.5, and 0 ≤ z ≤ 0.1).

The thickness of the negative electrode current collector may be in the range from approximately 3 µm to approximately 500 µm. The negative electrode current collector may not cause a chemical change in the secondary battery to be finally manufactured and may have high conductivity. The positive electrode current collector may include, for example, stainless steel, aluminum, nickel, titanium, calcined carbon, and an aluminum-cadmium alloy. The negative electrode current collector may also include stainless steel surface-treated with carbon, nickel, titanium, or silver. The surface of the negative electrode current collector may include a fine uneven structure to increase the adhesion of the active material. The negative electrode current collector may have a shape such as a film, a sheet, a foil, a net, a porous material, a foam, or a nonwoven fabric.

The negative active material may include carbon, for example, non-graphitizable carbon and graphite-based carbon. The negative active material may include, for example, metal composite oxide such as LiₓFe₂O₃(0≤x≤1), LixWO₂(0≤x≤1), and SnₓMe₁₋ₓMe'_{y}O_{z} (where, Me is one of Mn, Fe, Pb, and Ge, and Me' is one of Al, B, P, Si, an element of group 1, group 2, or group 3 of the periodic table, and a halogen, and 0 < x ≤ 1, 1 ≤ y ≤ 3, and 1 ≤ z ≤ 8). The negative electrode active material may include, for example, lithium metal, a lithium alloy, a silicon-based alloy, or a tin-based alloy. The negative electrode active material may include, for example, a metal oxide such SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may include, for example, a conductive polymer such as polyacetylene and a Li-Co-Ni-based material.

The positive electrode sheet PS, the negative electrode sheet NS and the separator sheets SP may be wound on the surface of a mandrel. The positive electrode sheet PS, the negative electrode sheet NS and the separator sheets SP may be wound by a rewinder 19. The jelly roll JR may be provided by winding the positive electrode sheet PS, the negative electrode sheet NS, and the separator sheets SP onto the mandrel, cutting and separating them, and then welding a positive electrode tab PT and a negative electrode tab NT to the separated winding structure. The positive electrode tab PT may be welded to an uncoated portion of the positive electrode, and the negative electrode tab NT may be welded to an uncoated portion of the negative electrode. The positive electrode tab PT and the negative electrode tab NT may be welded, for example, by ultrasonic welding, but are not limited thereto.

The processor 130 and/or the server 200 may be configured to obtain first process data and first inspection data corresponding to process P10 in which the jelly roll JR was manufactured. The processor 130 and the server 200 shown in FIG. 2 may be other examples of one or more processors of the battery manufacturing system 1000.

According to an embodiment, the first process data may include at least certain information (for example, tension information of the positive electrode sheet PS, negative electrode sheet NS, separator sheets SP, and winding information of the rewinder 19) related to the equipment that performed process P10 in which the jelly roll JR was manufactured and the time at which process P10 was performed.

According to an embodiment, the first inspection data may include measurement information obtained by measuring the dimensions of elements constituting the jelly roll JR by scanning, an image obtained by capturing the elements constituting the jelly roll JR through a vision machine, and state information of the inspected jelly roll JR based on at least one of the measurement information and the image. Herein, the measurement information may include the dimensions (for example, thickness and width) of the positive electrode sheet PS, negative electrode sheet NS, and separator sheets SP, the dimensions (for example, thickness and width) of the positive tab PT and negative electrode tab NT, a loading amount of a coating material on the electrode sheets PS and NS, the dimensions (for example, thickness and width) of an insulating material provided on the coating material, the dimensions (for example, thickness and width) of an overlapping section between the coating material and the insulating material, and information about mismatch between coating part lanes on the upper surface of the electrode sheets PS and NS and coating part lanes on the lower surface of the electrode sheets PS and NS. The image may include appearance images of the positive electrode sheet PS, negative electrode sheet NS, and separator sheets SP obtained by capturing through a vision machine, and appearance images of positive tab PT and the negative electrode tab NT. The state information may include a determination on the quality of the jelly roll JR based on at least one of the measurement information and the image. For example, the state information may include at least one of information on whether there is a defect determined based on the dimensions of elements constituting the jelly roll JR (for example, the positive sheet PS, the negative sheet NS, the separator sheets SP, the positive tab PT, the negative tab NT, the coating material, and the insulating material) and information on defect types (for example, a pinhole defect, a crater defect, a line defect, a crack defect, a side ring defect, an island defect, a fold defect, a wrinkle defect, an indentation defect, and a dent defect) determined based on the appearance images of the elements constituting the jelly roll JR.

Subsequently, referring to FIGS. 1, 2, and 4, in process P20, the jelly roll JR may be loaded onto a tray 20. The jelly roll JR may be placed in a row and column on the tray 20. Accordingly, the jelly rolls JR may be arranged on the tray 20 in a matrix or array.

Subsequently, referring to FIGS. 1, 2, 4, and 5, in process P30, the jelly roll JR may be unloaded from the tray 20 and loaded onto the carrier 115a. The sub-equipment 110a may include a pick-and-place machine configured to move the jelly roll JR from the tray 20 to the carrier 115a.

The sub-equipment 110a may include data matrix readers 111a for reading a data matrix DM1 (or other code object) of the tray 20, a controller 113a, and a carrier 115a. The controller 113a may be configured to control the data matrix reader 111a to read the data matrix DM1 and operation of the pick-and-place machine.

One of the data matrix readers 111a may be configured to detect the data matrix DM1 of the tray 20. The data matrix reader 111a may be configured to transmit a signal indicating a tray ID to the controller 113a when reading of the data matrix DM1 is successful. The tray ID, generally, identifies the tray 20 and may, for example, include a plurality of symbols for distinguishing and/or identifying the tray 20. The tray ID may be used to distinguish the tray 20 from other trays. Herein, the symbol may collectively refer to signs, characters, or marks for indicating a certain meaning.

The reading of the data matrix DM1 may include photographing an image including the data matrix DM1 and obtaining information included in the data matrix DM1 from the image. In addition, the reading of the data matrix DM1 may further include identifying the tray ID based on the information included in the data matrix DM1.

The controller 113a may be configured to load a positive electrode lot ID and positive electrode count from a server such as a manufacturing execution system (MES) with identification of the tray ID as a trigger. As another example, the controller 113a may be configured to load a negative lot ID and negative count from the server such as the MES with identification of the tray ID as a trigger. In the following, the present invention will be described focusing on an embodiment in which a positive electrode lot ID is used to generate a jelly roll ID. However, this is for illustrative purposes and does not limit the present invention in any sense. Herein, the positive electrode count and negative electrode count represent the order in which the jelly roll was manufactured in winder equipment. The controller 113a may be configured to determine the coordinates of the jelly roll JR on a tray based on the operation of the pick-and-place machine.

According to an embodiment, the controller 113a may be configured to generate (or assign) a jelly roll ID based on the positive electrode lot ID, the positive electrode count, the tray ID, and the tray coordinates. According to another embodiment, the controller 113a may transmit the cell tracking data CTDa including the positive electrode lot ID, the positive electrode count, the tray ID, and the tray coordinates to the controller 120a. The controller 120a may be configured to generate (or assign) a jelly roll ID based on the transmitted cell tracking data CTDa. For example, the jelly roll ID may correspond to a virtual ID generated based on acquired data, rather than a physically marked ID being identified, for example, by data matrix detection.

Due to the nature of the jelly roll JR as a semi-finished product, the jelly roll JR may not include an actual data matrix or other physical marking. Accordingly, the jelly roll ID assigned at the stage of being processed at a jelly roll JR level may be generated and managed on a facility network or a factory automation network, and may be referred to as a virtual ID. According to exemplary embodiments, the jelly roll ID may include a positive electrode lot ID, a positive electrode count, a tray ID, and tray coordinates. In other words, optionally, the tray coordinates or, generally, the position of a respective jelly roll on the tray 20 may be reflected in the jelly roll ID. Additionally, or alternatively, the electrode lot ID and/or the electrode count may be reflected in the jelly roll ID. For example, the jelly roll ID may include three parts or groups of coded information, wherein a first part represents the electrode lot ID, a second part represents the electrode count, and a third part represents the position of the jelly roll on the tray 20. Each part may be a sequence of numbers and/or symbols, for example.

Herein, the jelly rolls JR are input into the sub-equipment 110a according to an arrangement of the jelly rolls JR on the tray 20, and the symbol of the jelly roll ID indicating the tray coordinates of the jelly roll ID may indicate an input order of the jelly roll JR into the sub-equipment 110a. Since the sub-equipment 110a is a first stage of the assembly process, the input of the jelly roll JR into the sub-equipment 110a may also be referred to as the input of the jelly roll JR to the assembly process.

The controller 120a may transmit the jelly roll ID of the jelly roll JR to the processor 130 and/or the server 200. According to an embodiment, the processor 130 and/or the server 200 may be configured to map or associate the jelly roll ID obtained from the controller 120a with first process data and first inspection data of the jelly roll JR obtained in process P10. For example, the processor 130 and/or the server 200 may be configured to map the electrode lot ID of the jelly roll JR and the first process data and the first inspection data, and map the jelly roll ID and the first process data and the first inspection data through the electrode lot ID which is used to generate the jelly roll ID. Another one of the data matrix readers 111a may be configured to detect a data matrix DM2a of the carrier 115a. Accordingly, the other one of the data matrix readers 111a may be configured to identify a carrier ID of the carrier 115a from the data matrix DM2a of the carrier 115a. The carrier ID of the carrier 115a may include a plurality of symbols for distinguishing and/or identifying the carrier 115a. The carrier ID may be used to distinguish the carrier 115a from other carriers. The carrier ID, generally, identifies the carrier 115a.

When a pick-and-place machine picks up the jelly roll JR on the tray 20 and puts down the jelly roll JR on the carrier 115a, a data matrix DM1 of the tray 20 and the data matrix DM2a of the carrier 115a may be detected by the data matrix readers 111a of the sub-equipment 110a. The controller 113a may be configured to transmit the jelly roll ID to the controller 120a. The data matrix reader 111a may be configured to transmit the carrier ID of the carrier 115a to the controller 120a.

The controller 120a may be configured to collect the cell tracking data CTDa of the sub-equipment 110a. The cell tracking data CTDa may include data for obtaining the jelly roll ID of the jelly roll JR. For example, the cell tracking data CTDa may include a jelly roll ID generated by the sub-equipment 110a. In this case, the controller 120a may obtain the jelly roll ID by simply identifying the cell tracking data CTDa. As another example, the cell tracking data CTDa may include a positive electrode lot ID, a positive electrode count, a tray ID, and tray coordinates for generating a jelly roll ID. In this case, the controller 120a may generate the jelly roll ID of the jelly roll JR based on the positive electrode lot ID, the positive electrode count, the tray ID, and the tray coordinates included in the cell tracking data CTDa. The cell tracking data CTDa of the sub-equipment 110a may further include the carrier ID of the carrier 115a.

The cell tracking data CTDa may further include time data indicating the time at which the jelly roll ID is generated and the time at which the carrier ID is identified from the data matrix DM1a of the carrier 115a. In addition, the cell tracking data CTDa may further include the time at which the carrier ID is matched to the jelly roll ID.

The controller 120a may be configured to match or associate the carrier ID of the carrier 115a with the jelly roll ID of the jelly roll JR. According to an embodiment, the controller 120a may be configured to match the jelly roll ID and the carrier ID by comparing the time at which the jelly roll ID is generated and the time at which the carrier ID is identified based on the cell tracking data CTDa. For example, insofar as an interval between the generation time of the jelly roll ID and the identification time of the carrier ID is within a predetermined threshold time value, the generated jelly roll ID and the identified carrier ID may be allowed for the matching or associating. On the other hand, if the interval between the generation time of the jelly roll ID and the identification time of the carrier ID exceeds the threshold time value, then the jelly roll ID may be matched with another carrier ID whose time interval is less than or equal to the threshold value.

The data matrix reader 111a and/or the controller 120a may be configured to generate an unrecognized jelly roll ID when reading of the data matrix DM1 fails. Accordingly, the cell tracking data CTDa may include the unrecognized jelly roll ID or data indicating that reading of the data matrix DM1 failed. The unrecognized jelly roll ID may be matched or associated with the carrier ID of the carrier 115a.

The unrecognized jelly roll ID may have a different generation rule (or format) than the jelly roll ID, so that the unrecognized jelly roll ID may be easily distinguished from the jelly roll ID. As an example, a length of the unrecognized jelly roll ID may be different from a length of the jelly roll ID.

Similarly, when the reading of the data matrix DM2a fails, an unrecognized carrier ID may be matched with the jelly roll ID. The unrecognized carrier ID may have a different generation rule (or format) than the carrier ID, so that the unrecognized carrier ID may be easily distinguished from the carrier ID. As an example, a length of the unrecognized carrier ID may be different from a length of the carrier ID.

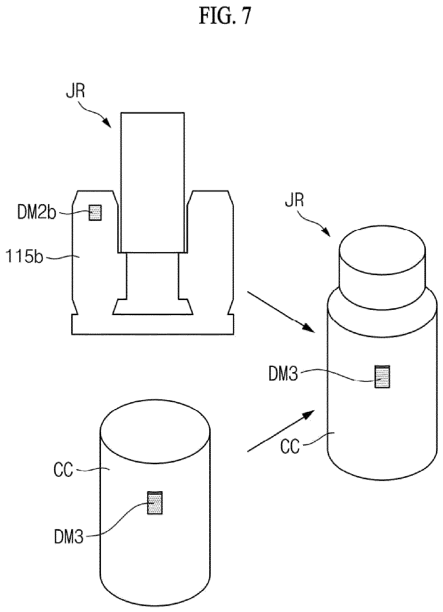

Subsequently, referring to FIGS. 1, 2, 5, 6 and 7, in process P40, a lower insulator and the jelly roll JR may be combined. The lower insulator may prevent unwanted short circuits between a cell case CC (see FIG. 7) described below and the jelly roll JR. The lower insulator and the jelly roll JR may be combined by the sub-equipment 110b.

The sub-equipment 110b may include data matrix readers 111b and the controller 113b. The controller 113b may be configured to control operation of the data matrix readers 111a and operation of equipment elements for combining the lower insulator with the jelly roll JR.

The carrier 115a of the sub-equipment 110a may be configured to transfer the jelly roll JR to the sub-equipment 110b. The jelly roll JR may be moved from the carrier 115a of the sub-equipment 110a to the carrier 115b of the sub-equipment 110b, for example, by the pick-and-place machine.

The data matrix readers 111b may be configured to detect data matrix DM2a of the carrier 115a and data matrix DM2b of the carrier 115b. One of the data matrix readers 111b may be configured to detect the data matrix DM2a of the carrier 115a and one of the data matrix readers 111b may be configured to detect the data matrix DM2b of the carrier 115b. The data matrix readers 111b may be configured to transmit a signal indicating or representing the carrier IDs of the carriers 115a and 115b to the controller 120a when reading of the data matrices DM2a and DM2b are successful. The controller 120a may identify carrier IDs of the carriers 115a, 115b based on the transmitted signal. The carrier ID of the carrier 115b may include a plurality of symbols for distinguishing and/or identifying the carrier 115b. The carrier ID may be used to distinguish the carrier 115b. Generally, the carrier IDs identify the respective carriers 115a and 115b.

The controller 120a may be configured to collect the cell tracking data CTDb of the sub-equipment 110b. The cell tracking data CTDb may include carrier IDs of the carriers 115a and 115b. The cell tracking data CTDb may further include time data indicating the time at which the carrier ID of the carrier 115a was identified and time at which the carrier ID of the carrier 115b was identified by the sub-equipment 110b. In addition, the cell tracking data CTDb may further include the time at which the carrier IDs of the carriers 115a and 115b were matched or associated with each other. When reading of any one of the data matrices DM2a, DM2b fails, the cell tracking data CTDb may include an unrecognized carrier ID.

The controller 120a may be configured to match or associate the carrier ID of the carrier 115a and the carrier ID of the carrier 115b. According to an embodiment, the controller 120a may be configured to match or associate the carrier IDs of the carriers 115a and 115b with each other by comparing the identification times of the carrier IDs based on the cell tracking data CTDb. For example, insofar as an interval between the identification times of the carrier IDs is within a predetermined threshold time value, the two identified carrier IDs may be allowed for the matching or associating. On the other hand, if the interval between the identification times of the carrier IDs exceeds the threshold time value, then the carrier IDs may be matched with other carrier IDs whose time interval is less than or equal to the threshold value. A buffer of the controller 120a stores matching between the carrier ID of the carrier 115a and the jelly roll ID of the jelly roll JR. The controller 120a may be configured to match or associate the jelly roll ID of the jelly roll JR and the carrier ID of the carrier 115b through the carrier ID of the carrier 115a.

The controller 120a may obtain second process data and second inspection data corresponding to process P40 targeting the jelly roll JR from the sub-equipment 110b.

According to an embodiment, the second process data may include at least one of information related to the equipment that performed process P40 targeting the jelly roll JR, the time at which process P40 was performed, and information related to the lower insulator combined with the jelly roll JR.

According to an embodiment, the second inspection data may include measurement information obtained by measuring the dimensions (for example, thickness and width) of the lower insulator combined with the jelly roll JR by scanning, an image obtained by capturing the jelly roll JR and the lower insulator using a vision machine, and state information of the jelly roll JR and the lower insulator inspected based on at least one of the measurement information and the image. Here, the state information may include at least one of information on whether the lower insulator is defective determined based on the dimensions of the lower insulator and information about the defect type (for example, defect in the lower imprint of the jelly roll JR, and defect in the In-tab or Out-tab of the electrode of the jelly roll JR) of determined based on the appearance image of the jelly roll JR and lower insulator.

The controller 120a may be configured to map or associate the obtained second process data and the second inspection data with the carrier ID of the carrier 115b. Accordingly, tracking of the second process data and the second inspection data may be provided based on the carrier ID and/or the jelly roll ID associated with the carrier ID.

Subsequently, referring to FIGS. 1, 2, and 7, in process P50, the jelly roll JR may be inserted into a cell case CC. The process P50 may also be referred to as a can insertion process. The jelly roll JR may be inserted into the cell case CC by the sub-equipment 110c. The cell case CC may be a metal can. The cell case CC may be, for example, a cylindrical or a prismatic can. Hereinafter, an example will be described with a focus on a cell case CC being cylindrical can. However, this is for illustrative purposes only and does not limit the present invention in any sense. A person skilled in the art will readily be able to arrive at an example in which the cell case CC is the prismatic can based on what is described herein.

The carrier 115b of the sub-equipment 110b may be configured to transfer the jelly roll JR to the sub-equipment 110c. The sub-equipment 110c may include data matrix readers 111c and the controller 113c. The controller 113c may be configured to control operation of the data matrix reader 111c and the operation for inserting the jelly roll JR into the cell case CC.

The data matrix readers 111c may be configured to detect or read the data matrix DM2a of the carrier 115b and a data matrix DM3 of the cell case CC. The data matrix reader 111c may be configured to transmit a signal indicating or representing the carrier ID of the carrier 115b to the controller 120a when the reading of the data matrix DM2b is successful. The controller 120a may identify the carrier ID of the carrier 115b based on the transmitted signal. The data matrix reader 111c may be configured to transmit a signal indicating the can ID of the cell case CC to the controller 120a when reading of the data matrix DM3 is successful.

The can ID of the cell case CC may include a plurality of symbols for distinguishing and/or identifying the cell case CC. That is, the can ID may include information for identifying the cell case CC. The can ID may be used to distinguish the cell case CC from other cell cases. The can ID may, for example, include a symbol indicating the coordinates or, generally, a position of the cell case CC on a can tray holding a plurality of cell cases CC. Accordingly, the can ID may include the tray coordinates or, generally, the position of the cell case CC on the can tray.

The input order of the cell case CC may generally be determined based on an arrangement of the cell cases CC on the can tray. That is, the cell case CC is input into the sub-equipment 110c according to the arrangement of the cell cases CC on the can tray. Similarly, the symbol or part of the can ID indicating the tray coordinates of the jelly roll ID may indicate the input order of the jelly roll JR into the sub-equipment 110a.

The controller 120a may be configured to collect the cell tracking data CTDc of the sub-equipment 100c. The cell tracking data CTDc may include the carrier ID of the carrier 115b and the can ID of the cell case CC. The cell tracking data CTDc may further include time data indicating the time at which the carrier ID of the carrier 115b is identified and the time at which the can ID of the cell case CC is identified by the sub-equipment 110c. In addition, the cell tracking data CTDc may further include the time matched to the jelly roll ID of the jelly roll JR and the can ID of the cell case CC.

The controller 120a may be configured to match or associate the carrier ID of the carrier 115b and the can ID of the cell case CC. According to an embodiment, the controller 120a may be configured to match the carrier ID of the carrier 115b and the can ID of the cell case CC by comparing the identification time of the carrier ID and the identification time of the can ID based on the cell tracking data CTDc. For example, insofar as an interval between the identification times of the carrier ID and the can ID is within a predetermined threshold time value, the identified carrier ID and can ID may be allowed for the matching or associating. On the other hand, if the interval between the identification times of the carrier ID and the can ID exceeds the threshold time value, then the carrier ID may be matched with another can ID whose time interval is less than or equal to the threshold value. The buffer of the controller 120a stores matching between the carrier ID of the carrier 115a and the jelly roll ID of the jelly roll JR and/or, matching between the carrier ID of the carrier 115b and the jelly roll ID of the jelly roll JR. The controller 120a may be configured to match the jelly roll ID of the jelly roll JR and the can ID of the cell case CC through the carrier ID of the carrier 115a and/or through the carrier ID of the carrier 115b.

The cell tracking data CTDc of the sub-equipment 110c may further include the carrier ID of the carrier 115b matched to or associated with the jelly roll ID. The data matrix reader 111b may be configured to transmit the unrecognized carrier ID to the controller 120a or information that the reading of the data matrix DM2b failed, when the reading of the data matrix DM2b fails. The controller 120a may be configured to issue an unrecognized jelly roll ID in response to the reception of the unrecognized carrier ID, and the cell tracking data CTDc may include the unrecognized jelly roll ID.

The data matrix reader 111b may be configured to transmit an unrecognized can ID or information that reading of the data matrix DM3 failed to the controller 120a when the reading of the data matrix DM3 fails. Accordingly, the cell tracking data CTDc may include the unrecognized can ID.

Accordingly, some of the jelly roll IDs of the jelly roll JR may be matched with unrecognized can IDs, and some of the can IDs of the cell case CC may be matched with unrecognized jelly roll IDs.

The controller 120a may obtain third process data and third inspection data corresponding to process P50 targeting the jelly roll JR from the sub-equipment 110c.

According to an embodiment, the third process data may include at least certain information related to the equipment that performed process P50 targeting the jelly roll JR, the time at which process P50 was performed, and information related to the cell case CC into which the jelly roll JR is inserted.

According to an embodiment, the third inspection data may include measurement information obtained by measuring the dimensions of the cell case CC by scanning, an image obtained by photographing the cell case CC through a vision machine, and state information of the inspected cell case CC based on at least one of the measurement information and the image. Here, the state information may include at least one of information on whether the cell case CC is defective determined based on the dimensions of the cell case CC and information on the defect type (for example, opening defect) determined based on the appearance image of the cell case CC.

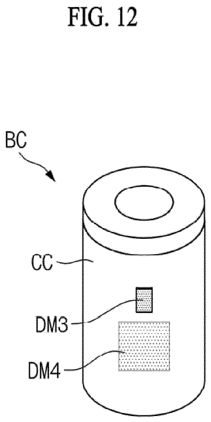

The controller 120a may be configured to map or associate the obtained third process data and third inspection data with the can ID of the cell case CC. Accordingly, tracking of the third process data and the third inspection data may be provided based on at least one of the can ID, the carrier ID mapped with the can ID, and the jelly roll ID. In addition, historical data of semi-finished products for providing battery cells (BCs) (see FIG. 12) can be collected based on the data matrix on the cell case CC, and tracking of the secondary battery manufacturing process may be provided.

Hereinafter, processes P60 to P180 in which the cell case CC into which the jelly roll JR is input during the secondary battery manufacturing process will be described.

Subsequently to process P50, in process P60, the negative electrode tab NT (see FIG. 3) of the jelly roll JR and a negative electrode terminal of the cell case CC may be welded. The process P60 may also be referred to as a negative electrode tab welding process. The tab welding process may be resistance welding. By applying pressure to the negative electrode tab NT (see FIG. 3) of the jelly roll JR and the negative electrode terminal of the cell case CC with an electrode rod and applying voltage (or current) between them, the negative electrode tab NT (see FIG. 3) of the jelly roll JR and the cell case CC may be melt-welded. The negative electrode tab NT (see FIG. 3) of the jelly roll JR may be welded to the negative electrode terminal of the cell case CC by the sub-equipment 110d.

The sub-equipment 110d may include the data matrix reader 111d and the controller 113d. The controller 113d may be configured to control operation of the data matrix reader 111d and the operation of the equipment elements for welding the negative electrode tab NT (see FIG. 3) of the jelly roll JR to the negative electrode terminal of the cell case CC.

The data matrix reader 111d may be configured to detect the data matrix DM3 of the cell case CC. The data matrix reader 111d may be configured to transmit a signal indicating the can ID of the cell case CC to the controller 120a when the reading of the data matrix DM3 is successful. The controller 120a may identify the can ID of the cell case CC based on the transmitted signal.

The controller 120a may be configured to collect the cell tracking data CTDd of the sub-equipment 110d. The cell tracking data CTDd may include the can ID of the cell case CC. The cell tracking data CTDd may further include time data indicating the time at which the can ID of the cell case CC was identified by the sub-equipment 110d. In addition, the cell tracking data CTDd may further include a time matched to the can ID of the cell case CC. The cell tracking data CTDd of the sub-equipment 110d may include an unrecognized can ID of the cell case CC when the reading of the data matrix DM3 fails.

Subsequently, in process P70, a swaging process may be performed on the cell case. The sub-equipment 110d may further include a swaging tool configured to perform the swaging process on the cell case CC. In the swaging process, an upper part of the cell case CC may be compression molded to reduce its outer diameter. Here, the upper part of the cell case CC may include an opening into which a jelly roll JR is inserted. A step portion may be formed on the cell case CC during the swaging process.

The controller 120a may obtain fourth process data and fourth inspection data corresponding to processes P60 and P70 targeting the jelly roll JR (or, the cell case CC with the jelly roll JR inserted) from the sub-equipment 110d.

According to an embodiment, the fourth process data may include at least one of information related to equipment that performed P60 and P70 processes targeting the jelly roll JR (or, the cell case CC with the jelly roll JR inserted), the time at which processes P60 and P70 were performed, and information related to set values (for example, pressure applied to the negative electrode terminal of the cell case CC, applied voltage (or current), welding position, number of welding strokes, swaging mold information) used in processes P60 and P70.

According to an embodiment, the fourth inspection data may include measurement information obtained by measuring the dimensions of the cell case CC by scanning, an image obtained by capturing the cell case CC through a vision machine, and state information of the inspected cell case CC based on at least one of the measurement information and the image. Here, the image may include at least one of an appearance image of the jelly roll JR obtained by capturing through a vision machine before performing the negative electrode tab NT process, an appearance image of the jelly roll JR (or, the cell case CC with the jelly roll JR inserted) obtained by capturing through the vision machine after performing the negative electrode tab NT process, and an appearance image of the jelly roll JR obtained by capturing through a vision machine after performing the swaging process. The state information may include at least one of information on whether the cell case CC is defective determined based on the dimensions of the cell case CC and information about the defect type (for example, jelly roll JR hole covering defect, jelly roll JR impingement defect, negative electrode tab NT defect) determined based on the appearance image of the jelly roll JR (or, the cell case CC with the jelly roll JR inserted).

The controller 120a may be configured to map or associate the obtained fourth process data and fourth inspection data with the can ID of the cell case CC. Accordingly, tracking of the fourth process data and the fourth inspection data may be provided based on at least one of the can ID, the carrier ID mapped with the can ID, and the jelly roll ID.

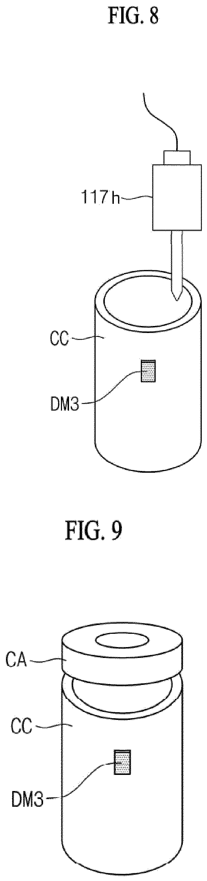

Subsequently, in process P80, an upper insulator may be inserted into the cell case CC. The upper insulator may prevent unwanted short circuit between a cap assembly CA (see FIG. 9) described below and the jelly roll JR.

The sub-equipment 110e may include the data matrix reader 111e and the controller 113e. The controller 113e may be configured to control operation of the data matrix reader 111e the operation of the equipment elements for inserting the upper insulator.

The data matrix reader 111e may be configured to detect the data matrix DM3 of the cell case CC. The data matrix reader 111e may be configured to transmit a signal indicating the can ID of the cell case CC to the controller 120b when reading of the data matrix DM3 is successful. The controller 120b may identify the can ID of the cell case CC based on the transmitted signal.

The controller 120b may be configured to collect the cell tracking data CTDe of the sub-equipment 110e. The cell tracking data CTDe may further include time data for the time at which the can ID of the cell case CC was identified by the sub-equipment 110e. In addition, the cell tracking data CTDe may include the can ID of the cell case CC. The cell tracking data CTDe may further include the time matched to the can ID of the cell case CC. The cell tracking data CTDe may include the unrecognized can ID of the cell case CC when the reading of the data matrix DM3 fails.

The controller 120b may obtain fifth process data and fifth inspection data corresponding to process P80 targeting the jelly roll JR (or, the cell case CC with the jelly roll JR inserted) from the sub-equipment 110e.

According to an embodiment, the fifth process data may include at least one of information related to the equipment that performed P80 process targeting the jelly roll JR (or, the cell case CC with the jelly roll JR inserted), the time at which P80 process was performed, and information related to the upper insulator combined with the jelly roll JR.

According to an embodiment, the fifth inspection data may include measurement information obtained by measuring the dimensions (for example, thickness and width) of the upper insulator inserted into the cell case CC by scanning, an image obtained by capturing the jelly roll JR (or, the cell case CC with the jelly roll JR inserted) and the upper insulator by a vision machine, and state information of the jelly roll JR (or, the cell case CC with the jelly roll JR inserted) and the upper insulator inspected based on at least one of the measurement information and the image. Here, the state information may include at least one of information on whether the upper insulator is defective determined based on the dimensions of the upper insulator and information about the defect type determined based on the appearance image of the jelly roll JR (or, the cell case CC with the jelly roll JR inserted) and the upper insulator.

The controller 120b may be configured to map or associate the obtained fifth process data and fifth inspection data and the can ID of the cell case CC. Accordingly, tracking of the fifth process data and the fifth inspection data may be provided based on the carrier ID and/or the jelly roll ID mapped with the carrier ID.

Subsequently, in process P90, a groove may be formed in the cell case CC. The groove may be used for seating a gasket which will be described below. The process of P90 may be referred to as beading. The groove of the cell case CC may be formed by the sub-equipment 110f.

The sub-equipment 110f may include the data matrix reader 111f and the controller 113f. The controller 113f may be configured to control operation of the data matrix reader 111f and the operation of groove-forming tools on the cell case CC.

The data matrix reader 111f may be configured to detect the data matrix DM3 of the cell case CC. The data matrix reader 111f may be configured to transmit a signal indicating the can ID of the cell case CC to the controller 120b when the reading of the data matrix DM3 is successful. The controller 120b may identify the can ID of the cell case CC based on the transmitted signal.

The controller 120b may be configured to collect the cell tracking data CTDf of the sub-equipment 110f. The cell tracking data CTDf may further include time data indicating the time at which the can ID of the cell case CC was identified by the sub-equipment 110f. In addition, the cell tracking data CTDf may include the can ID of the cell case CC. The cell tracking data CTDf may further include a time matched to the can ID of the cell case CC. The cell tracking data CTDf may include the unrecognized can ID of the cell case CC when the reading of the data matrix DM3 fails.

The controller 120b may obtain sixth process data and sixth inspection data corresponding to P90 process targeting the jelly roll JR (or the cell case CC with the jelly roll JR inserted) from the sub-equipment 110f.

According to an embodiment, the sixth process data may include at least one of information related to the equipment that performed process P90 targeting the jelly roll JR (or, the cell case CC with the jelly roll JR inserted), the time at which process P90 was performed, and information (for example, target shape, size, number of grooves) related to the groove formed in the cell case CC.

According to an embodiment, the sixth inspection data may include an image obtained by capturing the jelly roll JR (or, the cell case CC with the jelly roll JR inserted) through a vision machine and state information of the inspected jelly roll JR (or, the cell case CC with the jelly roll JR inserted) based on the image. Here, the state information may include information on a defect type (for example, a groove defect) determined based on the appearance image of the jelly roll JR (or, the cell case CC with the jelly roll JR inserted).

The controller 120b may be configured to map or associate the obtained sixth process data and sixth inspection data with the can ID of the cell case CC. Accordingly, tracking of the sixth process data and the sixth inspection data may be provided based on the carrier ID and/or the jelly roll ID mapped or associated with the carrier ID.

Subsequently, in process P100, an X-RAY inspection may be performed on the cell case CC. The X-RAY inspection may be performed by the sub-equipment 110g. The arrangement and defects of the electrodes may be inspected by the X-RAY inspection.

The sub-equipment 110g may include the data matrix reader 111g and the controller 113g. The controller 113g may be configured to control operation of the data matrix reader 111g and the operation of an X-RAY-based inspection machine.

The data matrix reader 111g may be configured to detect the data matrix DM3 of the cell case CC. The data matrix reader 111g may be configured to transmit a signal indicating the can ID of the cell case CC to the controller 120b when the reading of the data matrix DM3 is successful. The controller 120b may identify the can ID of the cell case CC based on the transmitted signal.

The controller 120b may be configured to collect the cell tracking data CTDg of the sub-equipment 110g. The cell tracking data CTDg may further include time data indicating the time at which the can ID of the cell case CC was identified by the sub-equipment 110g. In addition, the cell tracking data CTDg may include the can ID of the cell case CC. The cell tracking data CTDg may further include the time matched to the can ID of the cell case CC. The cell tracking data CTDg may include an unrecognized can ID of the cell case CC when the reading of the data matrix DM3 fails.

The controller 120b may obtain seventh process data and seventh inspection data corresponding to process P100 targeting the jelly roll JR (or, the cell case CC with the jelly roll JR inserted) from the sub-equipment 110g.

According to an embodiment, the seventh process data may include at least one of information related to equipment that performed process P100 targeting the jelly roll JR (or, the cell case CC with the jelly roll JR inserted) and the time at which P100 process was performed.

According to an embodiment, the seventh inspection data may include an X-RAY image of the jelly roll JR (or, the cell case CC with the jelly roll JR inserted) and state information of the inspected electrode based on the X-RAY image. Here, the state information may include a defect type (for example, electrode arrangement defect, size defect, electrode tab misalignment) determined based on the X-RAY image of the jelly roll JR (or, the cell case CC with the jelly roll JR inserted).

The controller 120b may be configured to map or associate the obtained seventh process data and seventh inspection data with the can ID of the cell case CC. Accordingly, tracking of the seventh process data and the seventh inspection data may be provided based on at least one of the can ID, the carrier ID mapped with the can ID, and the jelly roll ID.

Subsequently, referring to FIGS. 1, 2, and 8, in process P110, an electrolyte may be injected into the cell case CC. The process of P110 may also be referred to as an electrolyte injection process. The electrolyte may be formed by the sub-equipment 110h.

The sub-equipment 110h may include the data matrix reader 111h, the controller 113h, and an electrolyte injector 117h. The controller 113h may be configured to control operation of the data matrix reader 111h and the operation of the electrolyte injector 117h. The electrolyte injector 117h may be configured to inject the electrolyte into the cell case CC by using at least one of vacuum, capillary phenomenon, and wetting phenomenon.

The data matrix reader 111h may be configured to detect the data matrix DM3 of the cell case CC. The data matrix reader 111h may be configured to transmit a signal indicating the can ID of the cell case CC to the controller 120c when the reading of data matrix DM3 is successful. The controller 120c may identify the can ID of the cell case CC based on the transmitted signal.

The controller 120c may be configured to collect the cell tracking data CTDh of the sub-equipment 110h. The cell tracking data CTDh may further include time data indicating the time at which the can ID of the cell case CC was identified by the sub-equipment 110h. In addition, the cell tracking data CTDh may include the can ID of the cell case CC. The cell tracking data CTDh may further include the time matched to the can ID of the cell case CC. The cell tracking data CTDh may include the unrecognized can ID of the cell case CC when the reading of data matrix DM3 fails.

The controller 120c may obtain eighth process data and eighth inspection data corresponding to process P110 targeting the jelly roll JR (or, the cell case CC with the jelly roll JR inserted) from the sub-equipment 110h.

According to an embodiment, the eighth process data may include at least one of information related to the equipment that performed P110 process targeting the jelly roll JR (or, the cell case CC with the jelly roll JR inserted), the time at which P110 process was performed, and information related to the electrolyte (for example, the electrolyte component, the injection amount).

According to an embodiment, the eighth inspection data may include an image obtained by capturing the cell case CC through a vision machine and state information of the inspected cell case CC based on the image. Here, the state information may include an electrolyte impregnation degree determined based on the appearance image of the cell case CC.

The controller 120c may be configured to map or associate the obtained eighth process data and eighth inspection data with the can ID of the cell case CC. Accordingly, tracking of the eighth process data and the eighth inspection data may be provided based on at least one of the can ID, the carrier ID mapped with the can ID, and the jelly roll ID.

Subsequently, referring to FIGS. 1, 2 and 9, in process P120, the positive electrode tab PT (see FIG. 3) of the jelly roll JR and a positive electrode terminal of a cap assembly case CA may be welded. The process P120 may also be referred to as a positive electrode tab welding process. The positive electrode tab PT (see FIG. 3) of the jelly roll JR may be welded to the positive electrode terminal of the cap assembly by the sub-equipment 110i.

The sub-equipment 110i may include the data matrix reader 111i and the controller 113i. The controller 113i may be configured to control operation of the data matrix reader 111i and the operation of the welding tool.

The data matrix reader 111i may be configured to detect or read the data matrix DM3 of the cell case CC. The data matrix reader 111i may be configured to transmit a signal indicating the can ID of the cell case CC to the controller 120c when the reading of data matrix DM3 is successful. The controller 120c may identify the can ID of the cell case CC based on the transmitted signal.

The controller 120c may be configured to collect the cell tracking data CTDi of the sub-equipment 110i. The cell tracking data CTDi may further include time data indicating the time at which the can ID of the cell case CC was identified by the sub-equipment 110i. In addition, the cell tracking data CTDi may include the can ID of the cell case CC. The cell tracking data CTDi may further include the time matched to the can ID of the cell case CC. The cell tracking data CTDi may include the unrecognized can ID of the cell case CC when the reading of data matrix DM3 fails.

The controller 120c may obtain ninth process data and ninth inspection data corresponding to P120 process targeting the jelly roll JR (or, the cell case CC with the jelly roll JR inserted) from the sub-equipment 110i.

According to an embodiment, the ninth process data may include at least one of information related to the equipment that performed P120 process targeting the jelly roll JR (or, the cell case CC with the jelly roll JR inserted), the time at which P120 process was performed, and information related to setting values (for example, pressure applied to positive electrode terminal of cell case CC, applied voltage (or, current), welding position, number of welding strokes) used in P120 process.

According to an embodiment, the ninth inspection data may include measurement information obtained by measuring the dimensions of the cap assembly case CA by scanning, an image obtained by capturing the jelly roll JR (or, the cell case CC with the jelly roll JR inserted) and cap assembly case CA through a vision machine, and state information of the jelly roll JR (or, the cell case CC with the jelly roll JR inserted) and cap assembly case CA inspected based on at least one of the measurement information and the image. Here, the state information may include at least one of information on whether the cap assembly case CA is defective determined based on the dimensions of the cap assembly case CA and information about the defect type determined based on the appearance images of the jelly roll JR (or, the cell case CC with the jelly roll JR inserted) and cap assembly case CA.

The controller 120c may be configured to map or associate the obtained ninth process data and ninth inspection data with the can ID of the cell case CC. Accordingly, tracking of the ninth process data and ninth inspection data may be provided based on at least one of the can ID, the carrier ID mapped with the can ID, and the jelly roll ID.

Subsequently, referring to FIGS. 1, 2 and 10, in process P130, the battery cell may be sealed. The process P130 may also be referred to as a crimping process. In the crimping process, an upper part of a battery cell BC including a gasket and various safety devices (positive temperature coefficient (PTC) device, safety vent, and current break) is pressurized, so that the battery cell BC may be sealed. Here, the upper part of the battery cell BC may be a portion of the cell case CC in which the groove is formed in the beading process.

The sub-equipment 110j may include the data matrix reader 111j, the controller 113j, and a crimping tool 117j. The controller 113j may be configured to control operation of the data matrix reader 111j and the operation of the crimping tool 117j.

The data matrix reader 111j may be configured to detect or read the data matrix DM3 of the cell case CC. The data matrix reader 111j may be configured to transmit a signal indicating the can ID of the cell case CC to the controller 120c when the reading of data matrix DM3 is successful. The controller 120c may identify the can ID of the cell case CC based on the transmitted signal.

Subsequently, in process P140, the battery cell may be sized. By pressurizing the battery cell BC in the axial direction (or, in the height direction), the total height of the battery cell BC may be adjusted (or reduced). The sizing of the battery cell may be performed by the sub-equipment 110j.

The controller 120c may be configured to collect the cell tracking data CTDj of the sub-equipment 110j. The cell tracking data CTDj may further include time data for the time at which the can ID of the cell case CC was identified by the sub-equipment 110j. In addition, the cell tracking data CTDj may include the can ID of the cell case CC. The cell tracking data CTDj may further include the time matched to the can ID of the cell case CC. The cell tracking data CTDj may include the unrecognized can ID of the cell case CC when the reading of data matrix DM3 fails.

The controller 120c may obtain tenth process data and tenth inspection data corresponding to processes P130 and P140 targeting the jelly roll JR (or, the cell case CC with the jelly roll JR inserted) from the sub-equipment 110j.

According to an embodiment, the tenth process data may include at least one of information related to the equipment that performed processes P130 and P140 processes targeting the jelly roll JR (or the cell case CC with the jelly roll JR inserted), the time at which processes P130 and P140 were performed, information about the gasket that is seated in the groove, and setting values (for example, pressure and number of pressurization number applied to the upper part of battery cell BC during sealing, target total height of battery cell BC during sizing) used in processes P130 and P140.

According to an embodiment, the tenth inspection data may include an image obtained by capturing the jelly roll JR (or the cell case CC with the jelly roll JR inserted) through a vision machine, and state information of the jelly roll JR (or the cell case CC with the jelly roll JR inserted) inspected based on the image. Here, the state information may include information about a defect type determined based on an appearance image of the jelly roll JR (or the cell case CC with the jelly roll JR inserted).

The controller 120c may be configured to map or associate the obtained tenth process data and tenth inspection data with the can ID of the cell case CC. Accordingly, tracking of the tenth process data and the tenth inspection data may be provided based on the carrier ID and/or the jelly roll ID mapped or associated with the carrier ID.

Subsequently, referring to FIGS. 1, 2, and 11, the battery cell BC may be cleaned in process P150. The cleaning of the battery cell BC may be performed by the sub-equipment 110k. The sub-equipment 110k may include a cleaning solution sprayer 117k configured to spray a cleaning solution.

Subsequently, in process P160, the battery cell BC may be inspected. The inspection of the battery cell BC may include, for example, an external inspection by a vision machine and a three-dimensional scanning of the battery cell BC. The battery cell BC may be inspected by the sub-equipment 110l.

The processor 130 and/or the server 200 may obtain eleventh process data and eleventh inspection data corresponding to process P160 targeting the battery cell BC from the sub-equipment 110l.

According to an embodiment, the eleventh process data may include at least one of information related to the equipment that performed P160 process targeting the battery cell BC and the time at which process P160 was performed.

According to an embodiment, the eleventh inspection data may include at least one of measurement information obtained by measuring the dimensions of the battery cell BC by scanning, an image obtained by capturing the battery cell BC through a vision machine, and state information of the inspected battery cell BC based on at least one of the measurement information and the image. Here, the state information may include at least one of information on whether the battery cell BC is defective determined based on the dimensions of the battery cell BC and information about the defect type (for example, upper par and/or lower part slant defect and side defect) determined based on the appearance image of the battery cell BC.

The processor 130 and/or the server 200 may be configured to map or associate the obtained eleventh process data and eleventh inspection data with the can ID of the cell case CC. Accordingly, tracking of the eleventh process data and the eleventh inspection data may be provided based on at least one of the can ID, the carrier ID mapped or associated with the can ID, and the jelly roll ID.

Subsequently, referring to FIGS. 1, 2 and 12, in process P170, a data matrix DM4 may be formed in the battery cell BC. The data matrix DM4 may be formed by a method such as laser marking and ink jet marking. The data matrix DM4 may be formed by a marking machine 117m. The data matrix DM4 may include or represent information about a lot ID of the battery cell BC. That is, when a data matrix reader reads the data matrix DM4, a signal indicating the lot ID of the battery cell BC may be generated.

The lot ID of the battery cell BC may include a plurality of symbols for distinguishing and/or identifying the battery cell BC. That is, the lot ID may include information for identifying the battery cell BC. The lot ID may be used to distinguish and/or identify the battery cell BC.

The sub-equipment 110m may include data matrix readers 111m, the controller 113m, and the marking machine 117m. The controller 113m may be configured to control operation of the data matrix reader 111m and the operation of the marking machine 117m.

One of the data matrix readers 111m may be configured to detect or read the data matrix DM3 of the cell case CC. The data matrix reader 111m may be configured to transmit a signal indicating the can ID of the cell case CC to the controller 120d when reading of data matrix DM4 is successful. The controller 120d may identify the can ID of the cell case CC based on the transmitted signal.

Another one of the data matrix readers 111m may be configured to detect or read the data matrix DM4 formed by the marking machine 117m. The data matrix reader 111m may be configured to transmit a signal indicating the lot ID of the battery cell BC to the controller 113m when the reading of data matrix DM4 is successful. The controller 113m may be configured to transmit a signal indicating the lot ID of the battery cell BC to the controller 120d. The controller 120d may identify the lot ID of the battery cell BC based on the transmitted signal.

The controller 120d may be configured to collect the cell tracking data CTDm of sub-equipment 110m. The cell tracking data CTDm may include the can ID of cell case CC and the lot ID of battery cell BC. The cell tracking data CTDm may further include time data indicating the time at which the can ID of cell case CC is identified and the time at which the lot ID of battery cell BC is identified by the sub-equipment 110m.

The controller 120d may be configured to match or associate the can ID of the cell case CC and the lot ID of the battery cell BC. According to an embodiment, the controller 120d may be configured to match or associate the can ID of the cell case CC and the lot ID of the battery cell BC by comparing identification time of the can ID and identification time of the lot ID based on the cell tracking data CTDm. For example, insofar as an interval between the identification times of the can ID and the lot ID is within a predetermined threshold time value, the identified can ID and the lot ID may be allowed for the matching or associating. On the other hand, if the interval between the generation times of the can ID and the lot ID exceeds the threshold time value, then the can ID may be matched with another lot ID whose time interval is less than or equal to the threshold value.

The cell tracking data CTDm may further include a time matched to the can ID of the cell case CC. The cell tracking data CTDm may include the unrecognized can ID of the cell case CC when the reading of data matrix DM3 fails. The cell tracking data CTDm may include the unrecognized lot ID of the cell case CC when the reading of data matrix DM4 fails.

Subsequently, in process P180, an internal resistance of the battery cell BC may be measured. The internal resistance of the battery cell BC may be determined based on an open circuit voltage of the battery cell BC. The internal resistance of the battery cell BC may be measured by the sub-equipment 110n.

The sub-equipment 110n may include the data matrix reader 111n and the controller 113n. The controller 113n may be configured to control operation of the data matrix reader 111n and the operation of a jig and measuring device for measuring the internal resistance of the battery cell BC.

The data matrix reader 111n may be configured to detect the data matrix DM3 of the cell case CC. The data matrix reader 111n may be configured to transmit a signal indicating the can ID of the battery cell BC to the controller 120d when the reading of data matrix DM3 is successful. The controller 120d may identify the can ID of the cell case CC based on the transmitted signal.

The controller 120d may be configured to collect the cell tracking data CTDn of the sub-equipment 110n. The cell tracking data CTDn may include the can ID of the battery cell BC. The cell tracking data CTDn may further include a time matched to the can ID of the battery cell BC. The cell tracking data CTDn may include the unrecognized can ID of the cell case CC when the reading of the data matrix DM3 fails,

The controller 120d may obtain twelfth inspection data corresponding to process P180 targeting the battery cell BC from the sub-equipment 110n. Here, the twelfth inspection data may include information related to the internal resistance measurement result targeting the battery cell BC. For example, the twelfth inspection data may include a state measurement value of the battery cell BC (for example, the open circuit voltage and the internal resistance) and information related to whether the inspected battery cell BC is abnormal based on the state measurement value.

The controller 120d may be configured to match the obtained twelfth inspection data and the can ID of the cell case CC. Accordingly, tracking may be provided for the twelfth inspection data based on at least one of the can ID, the carrier ID matched with the can ID, and the jelly roll ID.

As described above, the assembly process of the battery cell may be tracked by using the jelly roll ID, the carrier ID, the can ID, and the lot ID. That is, a lot ID may be provided for the battery cell BC after shipment based on the reading of the data matrix DM4, and tracking of historical data of the sub-processes of the assembly process may be provided based on the lot ID.

More specifically, the sub-processes by the pieces of sub-equipment 110a, 110b, and 110c may be tracked by the jelly roll ID, the jelly roll ID may be matched to the can ID by the cell tracking data CTDc of the sub-equipment 110c. The sub-processes carried out by the pieces of sub-equipment 110c, 110d, 110e, 110f, 110g, 110h, 110i, 110j, 110m, and 110n may be tracked by the can ID, and the can ID can be matched to the lot ID by the cell tracking data of the sub-equipment 110n.

The controllers 120a, 120b, 120c, and 120d may be configured to collect the cell tracking data CTDa, CTDb, CTDc, CTDd, CTDe, CTDf, CTDg, CTDh, CTDi, CTDj, CTDm, and CTDn from the controllers 113a, 113b, 113c, 113d, 113e, 113f, 113g, 113h, 113i, 113j, 113m, and 113n. More specifically, the controller 120a may be configured to collect the cell tracking data CTDa, CTDb, CTDc, and CTDd collected from the controllers 113a, 113b, 113c, and 113d. The controller 120b may be configured to collect the cell tracking data CTDe, CTDf, and CTDg collected from the controllers 113e, 113f, and 113g. The controller 120c may be configured to collect the cell tracking data CTDh, CTDi, and CTDj collected from the controllers 113h, 113i, and 113j. The controller 120d may be configured to collect the cell tracking data CTDm and CTDn collected from the controllers 113m and 113n.

The controllers 120a, 120b, 120c, and 120d may perform the function of a network hub. The allocation of the cell tracking data CTDa, CTDb, CTDc, CTDd, CTDe, CTDf, CTDg, CTDh, CTDi, CTDj, CTDm, and CTDn collected from the controllers 113a, 113b, 113c, 113d, 113e, 113f, 113g, 113h, 113i, 113j, 113m, and 113n shown in FIG. 2 is for illustrative purposes and does not limit the present invention in any sense.

Each of the controllers 113a, 113b, 113c, 113d, 113e, 113f, 113g, 113h, 113i, 113j, 113m, and 113n and controllers 120a, 120b, 120c, and 120d may be a programmable logic controller (PLC). The PLC is a special type of microprocessor-based controller that uses a programmable memory to store instructions and implement functions such as logic, sequencing, timing, counting, and arithmetic to control machines and processes. The PLC is easy to operate and program.

Each of the controllers 113a, 113b, 113c, 113d, 113e, 113f, 113g, 113h, 113i, 113j, 113m, and 113n and controllers 120a, 120b, 120c, and 120d may include a power supply, a CPU, an input interface, an output interface, a communication interface, and memory devices. The power supply may be configured to provide power to other elements of the controller, such as the CPU, the input interface, the output interface, the communication interface, and the memory devices, for operation of the controller. The memory devices may include a read only memory (ROM) configured to store a system program, such as an operating system, and a random access memory (RAM) configured to store a user program and data, such as, state information of input and output devices, values of timers, counters, and other internal devices. The CPU may be configured to control communication between modules that implement logic and convert input signals into output operation signals. The CPU may operate based on the system program and user program stored in the memory devices. The CPU may be configured to write or read inspection data and measurement data to and from data areas of the memory devices based on the system program and user program. Conditions or data of industrial apparatuses and production processes may be transmitted to the CPU through the input module. The results processed by the CPU may be transmitted to an actuator through the output module. The communication interface may be configured to relay data transmission and reception between the controller and other network elements.

However, the present disclosure is not limited thereto, and each of the controllers 113a, 113b, 113c, 113d, 113e, 113f, 113g, 113h, 113i, 113j, 113m, and 113n and the controllers 120a, 120b, 120c, and 120d may include any one of a simple controller, a complex processor such as a microprocessor, a CPU, a GPU, a processor configured by software, dedicated hardware, and firmware. The controller may be implemented by, for example, a general-purpose computer or application-specific hardware such as a digital signal processor (DSP), a field programmable gate array (FPGA), and an application specific integrated circuit (ASIC). Generally, one or more processors may be provided to carry out the functions of the controllers 113a, 113b, 113c, 113d, 113e, 113f, 113g, 113h, 113i, 113j, 113m, and 113n and the controllers 120a, 120b, 120c, and 120d.

The processor 130 may be configured to receive the cell tracking data CTDa, CTDb, CTDc, CTDd, CTDe, CTDf, CTDg, CTDh, CTDi, CTDj, CTDm, and CTDn from the controllers 120a, 120b, 120c, and 120d. The processor 130 may be configured to collect the cell tracking data from the controllers 120a, 120b, 120c, and 120d.

The processor 130 may be configured to store a log file including at least one of the jelly roll ID, the carrier ID, the can ID, and the lot ID. The log file including at least one of the jelly roll ID, the carrier ID, the can ID, and the lot ID may include, for example, a log file of data matrix readers 111a, 111b, 11111d, 111e, 111f, 111g, 111h, 111i, 111j, 111m, and 111n, a trigger log file, an NG code log file, and an equipment data log file of the of controllers 120a, 120b, 120c, and 120d.

The processor 130 may be configured to generate a log file for the server based on the log file including at least one of the jelly roll ID, the carrier ID, the can ID, and the lot ID. The log file for the server may include logs of the data matrix readers 111a, 111b, 111c, 111d, 111e, 111f, 111g, 111h, 111i, 111j, 111m, and 111n, trigger logs, NG code logs, and equipment data logs of the controllers 120a, 120b, 120c, and 120d.

The log file for the server may have a format accessible from the server 200. The log file for the server may conform to the Hypertext Transfer Protocol (HTTP). The log file for the server may have, for example, a hypertext markup language (HTML) format.

The processor 130 may be configured to transmit the cell tracking data CTDa, CTDb, CTDc, CTDd, CTDe, CTDf, CTDg, CTDh, CTDi, CTDj, CTDm,and CTDn to the server 200. The server 200 may be configured to store the cell tracking data CTDa, CTDb, CTDc, CTDd, CTDe, CTDf, CTDg, CTDh, CTDi, CTDj, CTDm, and CTDn. The server 200 may be configured to store matching between different IDs used in each phase of the assembly process, such as the jelly roll ID, the carrier ID, the can ID, and the lot ID. Accordingly, tracking of historical data of the assembly process of the secondary battery of the product during manufacturing or after shipment may be provided.

The server 200 may include a physical server or a cloud server. The server 200 may be implemented as a virtual server, but is not limited thereto. The server 200 may provide data and analysis results to the worker through various frameworks. The framework may include a protocol supporting data transmission so that the client device visualizes data through the user interface and provides updated visualizations when the data is calculated by the server 200. The protocol supporting the data transmission may use HTML, JavaScript, and/or JavaScript Object Notation (JSON).

The server 200 may include various application programming interfaces (APIs) for storing data in databases and other data management tools. The APIs may also be used to retrieve data from databases of various data management systems. The data management system may provide access to the database, pull data from the database, retrieve data from the database, and generate metrics. Metrics herein are tools for visualizing data. The metrics contain measurements generated in time series, and may be used to monitor applications and generate health alerts.

According to an embodiment, the server 200 may be configured to obtain a roll map of the jelly roll JR from an electrode manufacturing system (not shown) that performs an electrode manufacturing process prior to the secondary battery assembly process

The electrode manufacturing process may be a process of manufacturing a jelly roll JR through a mixing process of mixing various raw materials needed for electrode manufacturing, a coating process of applying an active material and a predetermined insulating material to the surface of a metal electrode plate, which is a current collector, to form a positive electrode and a negative electrode, a roll pressing process of rolling the coated electrode, and a slitting process of cutting the rolled electrode to the specifications of the jelly roll JR. In the mixing process, coating process, rolling process, and slitting process, the electrode may be wound between an unwinder and a rewinder and may proceed in a roll-to-roll state. The roll map may be displayed in the form of a bar which simulates the electrode progress in each of a plurality of sub-processes included in the electrode manufacturing process. In other words, the roll map may be a graphical representation of the electrode, preferably a bar shaped representation. On the roll map, the longitudinal dimensions of the electrode may be shown as coordinates, and information about the quality of the electrode may be shown along or matched with the corresponding coordinates. For example, electrode appearance information obtained by an image-based inspection device such as a vision machine, information on short circuits and joints of the electrode, information on an electrode portion where sampling inspection was performed, information on the electrode portion scheduled for scraping, information on the scraped electrode portion, information on whether the coating material and insulating material on the electrode are defective, and information on the defect type (for example, the pinhole defect, crater defect, line defect, crack defect, side ring defect, island defect, fold defect, wrinkle defect, dent defect, and imprint defect) of the electrode may be displayed on the roll map along with the corresponding coordinates.

The server 200 may be configured to map or associate the cell ID corresponding to the semi-finished product cell and the roll map. According to an embodiment, the server 200 may be configured to map or associate the jelly roll ID of the jelly roll JR with the roll map.

For example, the server 200 may be configured to associate the jelly roll ID and the roll map based on the electrode lot ID of the jelly roll JR. The server 200 may be configured to obtain the electrode lot ID of the jelly roll JR from the electrode manufacturing system (not shown). Furthermore, the server 200 may be configured to further obtain the roll map associated with the electrode lot ID from the electrode manufacturing system (not shown). The electrode manufacturing system (not shown) may be configured to generate the electrode lot ID of the jelly roll JR and generate the roll map based on the progress of the electrode included the jelly roll JR in the electrode manufacturing process. In addition, the electrode manufacturing system (not shown) may be configured to map or associate the electrode lot ID and roll map of the jelly roll JR with each other, and transmit the roll map associated with the electrode lod IT to the server 200.

Since the jelly roll ID of the jelly roll JR is generated based on the electrode lot ID loaded from the server 200 by the controller 113a as described above, the server 200 may be configured to map or associate the jelly roll ID and the roll map through the electrode lot ID. Thereafter, the server 200 may be configured to associate the roll map with at least one of the carrier ID, the can ID, and the lot ID that matches the jelly roll ID. Accordingly, tracking of the roll map may be provided based on at least one of the jelly roll ID, the carrier ID, the can ID, and the lot ID that maps the roll map.

According to an embodiment, the server 200 may be configured to obtain activation data of the battery cell BC from an activation system (not shown) that performs an activation process after the secondary battery assembly process.

Here, the activation process may be a process of stabilizing a battery structure and imparting battery characteristics to the battery cell BC manufactured through the assembly process through a plurality of sub-processes such as aging, charging, and discharging. The activation data may include setting data related to setting values (for example, aging temperature, charging/discharging state of charge (SOC)) used in a plurality of sub-processes included in the activation process, state data related to the state of the battery cell BC (for example, the voltage, the current, the temperature, and the SOC) obtained during the activation process, and diagnosing data for diagnosing an abnormality (for example, a low voltage and an internal short circuit) of the battery cell (BC) based on the state data.

According to an embodiment, the server 200 may be configured to obtain the activation data from an activation system (not shown). Furthermore, the server 200 may be configured to further obtain the activation data mapped or associated with the can ID and/or the lot ID of the battery cell BC from the activation system (not shown). The activation system (not shown) may be configured to identify the can ID and/or lot ID of the battery cell BC that is a target of the activation process, and generate the activation data of the battery cell BC in the activation process. Furthermore, the activation system (not shown) may be configured to map or associate the can ID and/or the lot ID of the battery cell BC with the activation data, and transmit the can ID and/or the lot ID associated with the activation data to the server 200. The can ID and/or lot ID of the battery cell BC are identified by the secondary battery manufacturing system 1000 as described above and mapped with the process data and the ID (for example, the jelly roll ID and the carrier ID) in the previous process, and thus tracking of the activation data of the battery cell BC may be provided based on at least one of the jelly roll ID, the carrier ID, the can ID, and the lot ID.

The processor 130 and the server 200 may be implemented by hardware, firmware, software, and a combination thereof. For example, the processor 130 and the server 200 may include computing devices such as a workstation computer, a desktop computer, a laptop computer, and a tablet computer. The processor 130 and the server 200 may also include any one of a simple controller, a microprocessor, a complex processor such as a CPU, a GPU, a processor configured with software, dedicated hardware, and firmware. The processor 130 and the server 200 may be implemented by, for example, a general-purpose computer or application-specific hardware such as a digital signal processor (DSP), a field programmable gate array (FPGA), and an application specific integrated circuit (ASIC). Generally, the one or more processors may also assume the functions of the processor 130 and/or the server 200.

The operations of the processor 130 and the server 200 may be implemented as instructions stored on a machine-readable medium, i.e., a memory, that can be read and executed by one or more processors. Here, the machine-readable medium may include any mechanism for storing and/or transmitting information in a form readable by a machine (for example, a computing device). For example, the machine-readable medium may include a read only memory (ROM), a random access memory (RAM), a magnetic disk storage medium, an optical storage medium, a flash memory, electrical, optical, acoustical or other forms of radio signals (for example, carrier waves, infrared signals, and digital signals), and any other signals. The processor 130 and server 200 may be configured with firmware, software, routines, and instructions for performing the operations described above or any of the processes described below. For example, the processor 130 and server 200 may be instantiated in memory.

The secondary battery manufacturing system 1000 may implement a plug-in architecture with APIs for data acquisition to provide plug-and-play connectivity of sensors, measuring instruments, and testers. Accordingly, resources at a specific process operation and a specific site may be easily transferred to other processes and other sites, or new resources may be easily introduced to each process operation and site.

In some embodiments, the secondary battery manufacturing system 1000 may further include a manual input system that allows an operator to input manufacturing data. The secondary battery manufacturing system 1000 may allow an operator to input data using an input tool and computer-based input of manufacturing data, such as scraping an Excel file. The manual input system may be, for example, human-machine interfaces (HMSs) of supervisory control and data acquisition (SCADA). The SCADA may typically include a combination of software and hardware, such as remote terminal units (RTUs) and programmable logic controllers (PLCs). The HMI is a screen that supports communication between the operator and a SCADA system and is a major element of the SCADA system. For example, manual input by the HMI may include selection of a defect type and reflection of performance upon completion.

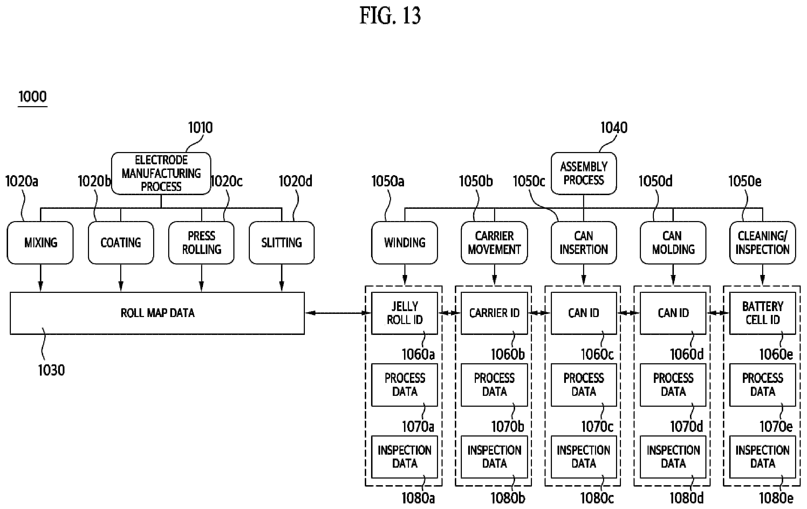

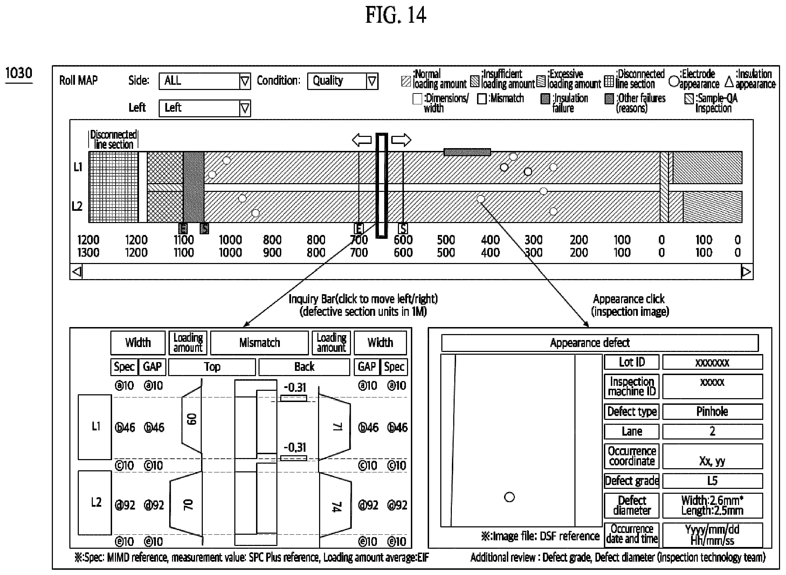

FIG. 13 is a diagram illustrating a method of managing data by the secondary battery manufacturing system 1000 according to exemplary embodiments. FIG. 14 is a diagram showing the roll map data illustrated in FIG. 13.

Referring to FIG. 13 and FIG. 14, the secondary battery manufacturing system 1000 may be configured to map roll map data 1030 collected based on an electrode manufacturing process 1010 and data 1060a, 1060b, 1060c, 1060d, and 1060e, 1070a, 1070b, 1070c, 1070d, and 1070e, 1080a, 1080b, 1080c, 1080d, and 1080e collected based on the assembly process 1040 and manage the roll map data 1030 and the data 1060a, 1060b, 1060c, 1060d, and 1060e, 1070a, 1070b, 1070c, 1070d, and 1070e, 1080a, 1080b, 1080c, 1080d, and 1080e.

According to an embodiment, the secondary battery manufacturing system 1000 may be configured to obtain the roll map data 1030 based on the electrode manufacturing process 1010. The roll map data 1030 may be data represented in the form of a bar by simulating the electrode progress in a mixing process 1020a, a coating process 1020b, a roll pressing process 1020c, and a slitting process 1020d included in the electrode manufacturing process 1010.

According to an embodiment, the secondary battery manufacturing system 1000 may be configured to obtain identification data 1060a, 1060b, 1060c, 1060d and 1060e, process data 1070a, 1070b, 1070c, 1070d and 1070e, and inspection data 1080a, 1080b, 1080c, 1080d and 1080e of a semi-finished product based on an assembly process 1040.

According to an embodiment, the secondary battery manufacturing system 1000 may be configured to obtain a jelly roll ID 1060a of a jelly roll JR, the process data 1070a of a winding process 1050a, and the inspection data 1080a based on the winding process 1050a (for example, process P10 of FIG. 1) included in the assembly process 1040. In this case, the process data 1070a and the inspection data 1080a may be mapped or associated with the jelly roll ID 1060a.

According to an embodiment, the secondary battery manufacturing system 1000 may be configured to map the jelly roll ID 1060a with the roll map data 1030. Accordingly, tracking of the roll map data 1030, the process data 1070a, and the inspection data 1080a may be provided based on the jelly roll ID 1060a.

According to an embodiment, the secondary battery manufacturing system 1000 may be configured to obtain the carrier ID 1060b of the carrier and the process data 1070b and inspection data 1080b of a carrier movement process 1050b (for example, processes P30 and P40 of FIG. 1), based on the carrier movement process 1050b included in the assembly process 1040. In this case, the process data 1070b and the inspection data 1080b may be mapped or associated with the carrier ID 1060b.

According to an embodiment, the secondary battery manufacturing system 1000 may be configured to match the carrier ID 1060b and the jelly roll ID 1060a. Accordingly, tracking of the roll map data 1030, the process data 1070a, 1070b, and the inspection data 1080a, 1080b may be provided based on at least one of the jelly roll ID 1060a and the carrier ID 1060b.

According to an embodiment, the secondary battery manufacturing system 1000 may be configured to obtain the can ID 1060c of the cell case CC and the process data 1070c and inspection data 1080c of a can insertion process 1050c (for example, process P50 of FIG. 1) based on the can insertion process 1050c included in the assembly process 1040. In this case, the process data 1070c and the inspection data 1080c may be mapped or associated with the can ID 1060c.

According to an embodiment, the secondary battery manufacturing system 1000 may be configured to match the can ID 1060c and the carrier ID 1060b. Accordingly, tracking of the roll map data 1030, process data 1070a, 1070b, and 1070c, and inspection data 1080a, 1080b, and 1080c may be provided based on at least one of the jelly roll ID 1060a, the carrier ID 1060b, and the can ID 1060c.

According to an embodiment, the secondary battery manufacturing system 1000 may be configured to obtain the can ID 1060d of the cell case CC and process data 1070d and inspection data 1080d of a can molding process 1050d (for example, processes P60 to P140 of FIG. 1) based on the can molding process 1050d included in the assembly process 1040. In this case, the process data 1070d and the inspection data 1080d may be mapped or associated with the can ID 1060d.

Meanwhile, since the can ID 1060c and the can ID 1060d are identical to each other, tracking of the roll map data 1030, process data 1070a, 1070b, 1070c, and 1070d, and inspection data 1080a, 1080b, 1080c, and 1080d may be provided based on at least one of the jelly roll ID 1060a, the carrier ID 1060b, and the can ID 1060c without separate ID matching.

According to an embodiment, the secondary battery manufacturing system 1000 may be configured to obtain the battery cell ID 1060e (for example, the lot ID) of a battery cell BC and the process data 1070e and inspection data 1080e of a cleaning/inspection process 1050e based on the cleaning/inspection process 1050e (for example, processes P150 to P180 of FIG. 1) included in the assembly process 1040. In this case, the process data 1070e and inspection data 1080e may be mapped with the battery cell ID 1060e.

According to an embodiment, the secondary battery manufacturing system 1000 may be configured to match the battery cell ID 1060e and the can ID 1060c. Accordingly, tracking of the roll map data 1030, process data 1070a, 1070b, 1070c, 1070d, and 1070e, and inspection data 1080a, 1080b, 1080c, 1080d, and 1080e may be provided based on at least one of the jelly roll ID 1060a, the carrier ID 1060b, the can ID 1060c, and the battery cell ID 1060e.

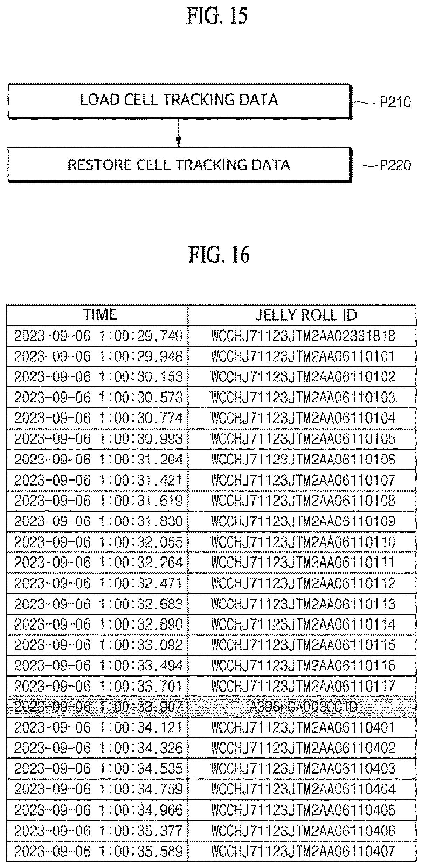

FIG. 15 is a flowchart for describing a method of managing the cell tracking data CTDc according to exemplary embodiments.

FIG. 16 is a diagram for describing the method of managing the cell tracking data CTDc according to exemplary embodiments. More specifically, FIG. 16 illustrates a portion of the cell tracking data CTDc including a jelly roll ID.

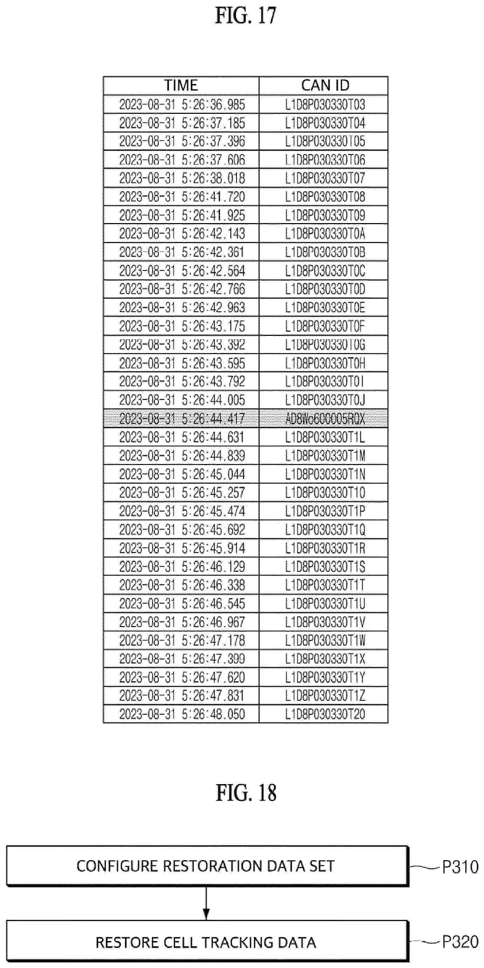

FIG. 17 is a diagram for describing a method of managing the cell tracking data CTDc according to exemplary embodiments. More specifically, FIG. 17 illustrates a portion of the cell tracking data CTDc that includes a can ID.

Referring to FIGS. 1, 2, and 5, and FIGS. 15 to 17, restoration of an unrecognized jelly roll ID and an unrecognized can ID may be performed by the server 200. The server 200 may include a logic for the restoration of the unrecognized jelly roll ID and the unrecognized can ID. The logic may operate based on a preset management cycle of the cell tracking data CTDc.

The cell tracking data CTDc may be loaded in step P210. An unrecognized ID restoration logic may include a query for retrieving and/or loading a portion of the cell tracking data CTDc including the unrecognized jelly roll ID or the unrecognized can ID from a database of the server 200.

Subsequently, the cell tracking data CTDc may be restored in step P220. The restoration of the cell tracking data may include restoration of the unrecognized jelly roll ID of the cell tracking data CTDc collected in process P50 or restoration of the unrecognized can ID of the cell tracking data CTDc collected in process P50.

Referring to FIGS. 1, 2, 5, 15, and 16, the unrecognized jelly roll ID included in the cell tracking data CTDc may be restored based on a jelly roll ID temporally adjacent to an unrecognized ID. According to exemplary embodiments, the unrecognized jelly roll ID may be restored based on a jelly roll ID preceding the unrecognized jelly roll ID. According to exemplary embodiments, the unrecognized jelly roll ID may be restored based on a jelly roll ID subsequent to the unrecognized jelly roll ID. According to exemplary embodiments, the unrecognized jelly roll ID may be restored based on the jelly roll ID preceding the unrecognized jelly roll ID and jelly roll ID subsequent to the unrecognized jelly roll ID. For example, as exemplarily shown in FIG. 16, the cell tracking data CTDc may be time series data in which each jelly roll ID is assigned to one respective time value. Optionally, a respective jelly roll ID may be assigned to a time value representing the point of time at which the jelly roll ID is detected or generated. Thereby, the cell tracking data may list the jelly roll IDs sorted according to the time values assigned to the jelly roll IDs.

Since an unrecognized jelly roll ID and the jelly roll ID are temporally adjacent to each other, the jelly roll ID assigned to a third time value between a first time value assigned to the unrecognized jelly roll ID and a second time assigned to the jelly roll ID is not present in the cell tracking data CTDc. That is, in the time alignment of the cell tracking data CTDc, when the jelly roll ID is arranged right next to the unrecognized jelly roll ID, the jelly roll ID of the unrecognized jelly roll ID may be referred to as temporally adjacent thereto.

As described above, the jelly roll ID may be generated based on the positive electrode lot ID, positive electrode count, tray ID, and tray coordinates or, generally, position of the jelly roll on the tray. The last four symbols of the jelly roll ID may represent the position of the jelly roll on the tray, e.g., a row coordinate and column coordinate on the tray 20. Other symbols of the jelly roll ID may represent the positive electrode lot ID, positive electrode count, and tray ID. The 'A396Nca0003CC1D' highlighted in shade in the table of FIG. 14 may have a different format from the jelly roll ID, and may be an unrecognized jelly roll ID.

Since the jelly rolls JR are arranged in a matrix on the tray 20 and are sequentially input into the sub-equipment 110a, the jelly roll IDs that are temporally adjacent were derived from the jelly rolls JR that are arranged adjacently on the tray 20. Accordingly, in the example shown in FIG. 16, the unrecognized jelly roll ID 'A396Nca0003CC1D' may be restored based on the preceding jelly roll ID 'WCCHJ71123JTM2AA06110117' and/or the subsequent jelly roll ID 'WCCHJ71123JTM2AA06110401'.

In this example, the jelly rolls JR on the tray 20 may be arranged in an 18×18 matrix. The last four symbols in the jelly roll ID 'WCCHJ71123JTM2AA06110117' and the jelly roll ID 'WCCHJ71123JTM2AA06110401' represent the coordinates of the jelly rolls JR on the tray 20. More specifically, the last four symbols '0117' of the jelly roll ID 'WCCHJ71123JTM2AA06110117' indicate that the jelly roll ID is derived from the jelly roll JR located in a seventeenth column of a first row of the tray 20. The last four symbols '0401' of the jelly roll ID 'WCCHJ71123JTM2AA06110401' indicate that the jelly roll ID is derived from the jelly roll JR located in a first column of a fourth row of the tray 20. Hence, since the jelly rolls JR are arranged on the tray 20 in an 18×18 matrix, it can be seen from FIG. 16, that no jelly roll ID is available for the last column (eighteenth column) of the first row. Hence, given the 18x18 matrix arrangement of jelly rolls JR on the tray 20, the jelly roll ID of the jelly roll JR located in the seventeenth column of the first row is jelly roll ID adjacent to the jelly roll ID of the jelly roll JR positioned in the first row at the eighteenth column.

Since the unrecognized jelly roll ID included in the cell tracking data CTDc may be restored based on a jelly roll ID temporally adjacent to an unrecognized ID, it can be seen from FIG. 16 that the jelly roll JR corresponding to the jelly roll ID 'WCCHJ71123JTM2AA06110401' is arranged in a different row on the tray 20 from the jelly roll JR corresponding to the unrecognized jelly roll ID 'A396Nca0003CC1D', and the jelly roll JR corresponding to the jelly roll ID 'WCCHJ71123JTM2AA06110117' is arranged in the same row on the tray 20 as the jelly roll JR corresponding to the unrecognized jelly roll ID 'A396Nca0003CC1D'. Accordingly, the unrecognized jelly roll ID 'A396Nca0003CC1D' can be restored as 'WCCHJ71123JTM2AA06110118'.

That is, restoration of an unrecognized jelly roll ID may include changing a symbol representing the coordinates on the tray 20 (or an input order in the assembly process) among adj acent jelly roll IDs to adjacent coordinates. According to exemplary embodiments, the restoration of the unrecognized jelly roll ID may include changing a symbol representing the coordinates on the tray 20 (or an input order in the assembly process) among adjacent jelly roll IDs to preceding coordinates (or order). According to exemplary embodiments, the restoration of the unrecognized jelly roll ID may include changing a symbol representing the coordinates on the tray 20 (or an input order in the assembly process) among adjacent jelly roll IDs to subsequent coordinates (or order).

In the above, the restoration of the unrecognized jelly roll ID derived from the embodiment in which the jelly rolls JR are arranged in an 18×18 array on the tray 20 has been described, but this is merely an example and does not limit the present invention in any sense. A person skilled in the art will be able to easily achieve the restoration of the unrecognized jelly roll ID derived from the embodiment in which the jelly rolls JR are arranged in an arbitrary matrix on the tray 20.

Referring to FIGS. 1, 2, 7, 15, and 17, restoration of an unrecognized can ID of the cell tracking data CTDc may include restoring an unrecognized can ID based on at least one can ID temporally adjacent to the unrecognized can ID. According to exemplary embodiments, the unrecognized can ID may be restored based on a can ID preceding the unrecognized can ID. According to exemplary embodiments, the unrecognized can ID may be restored based on a can ID subsequent to the unrecognized can ID. According to exemplary embodiments, the unrecognized can ID may be restored based on the can ID preceding the unrecognized can ID and the can ID subsequent to the unrecognized can ID. In the table of FIG. 17, 'AD8Wo600005RQX' highlighted in shade may have a different format from the can ID and may be an unrecognized can ID. For example, as exemplarily shown in FIG. 17, the cell tracking data CTDc may be time series data in which each can ID is assigned to one respective time value. Optionally, a respective can ID may be assigned to a time value representing the point of time at which the can ID is detected. Thereby, the cell tracking data may list the can IDs sorted according to the time values assigned to the can IDs.

The cell cases CC may be arranged in a matrix on the tray, for example, in a 17×18 matrix including seventeen columns and eighteen rows. Since the cell cases CC are arranged in a matrix on the can tray and are sequentially input into the sub-equipment 110c, temporally adjacent can IDs may be derived from the cell cases CC that are arranged adjacently on the tray 20. That is, in the cell tracking data CTDc, adjacent can IDs may include symbols that change sequentially. Accordingly, at least one of the symbols of the can IDs in the cell tracking data CTDc may indicate the order in which the cell case CC was input to the sub-equipment 110c.

For example, the can ID 'L1D8P030330T04' may follow the can ID 'L1D8P030330T03', the can ID 'L1D8P030330T05' may follow the can ID 'L1D8P030330T04', and the can ID 'L1D8P030330T06' may follow the can ID 'L1D8P030330T05'. Accordingly, a portion of the symbols of the can ID may represent the input order of the cell case CC from which the can ID is derived. For example, the last two symbols of the can ID may indicate the position within the matrix. For example, in Fig. 17, a 17×18 matrix including seventeen columns and eighteen rows may be provided. Looking at Fig.17, since the last two symbols of the can ID are consecutive from 03 to 09 and from 0A to 0J, they can be understood as can IDs derived from cell cases (CC) arranged in 17 columns in one row, and the subsequent 17 can IDs can likewise be understood as derived from cell cases (CC) arranged in 17 columns in one row.

The unrecognized can ID 'AD8Wo600005RQX' may be restored based on the preceding can ID 'L1D8P030330T0J' and/or the subsequent can ID 'L1D8P030330T1L'. In this example, the cell cases CC on the can tray may be arranged in a 17×18 matrix, and seventeen cell cases CC may be input into the sub-equipment 110c at a time. Accordingly, the can ID 'L1D8P030330T0J' is derived from a different row from the unrecognized can ID 'AD8Wo600005RQX', and the can ID 'L1D8P030330T1L' is derived from the same row as the unrecognized can ID 'AD8Wo600005RQX'. Accordingly, the unrecognized can ID 'AD8Wo600005RQX' may be restored as 'L1D8P030330T1K'.

In the above, an example in which seventeen cell cases CC are input into the sub-equipment 110c and seventeen can IDs are sequentially changed has been described, but this is a simple example and does not limit the present invention in any sense. A person skilled in the art will be able to easily arrive at an embodiment in which a number of cell cases CC less than seventeen cell cases CC or more than seventeen cell cases CC are simultaneously input into the sub-equipment 110c.

The cell tracking data CTDc of process P50 includes matching between the jelly roll ID and can ID, and may be used for connecting preceding historical data and subsequent historical data. According to exemplary embodiments, the unrecognized jelly roll ID and the unrecognized can ID may be restored based on the rules of the jelly roll ID and the can ID of the cell tracking data CTDc, and the traceability disconnection is prevented, and accordingly, the reliability of secondary battery manufacturing may be improved.

FIG. 18 is a flowchart for describing a method of managing cell tracking data according to exemplary embodiments.

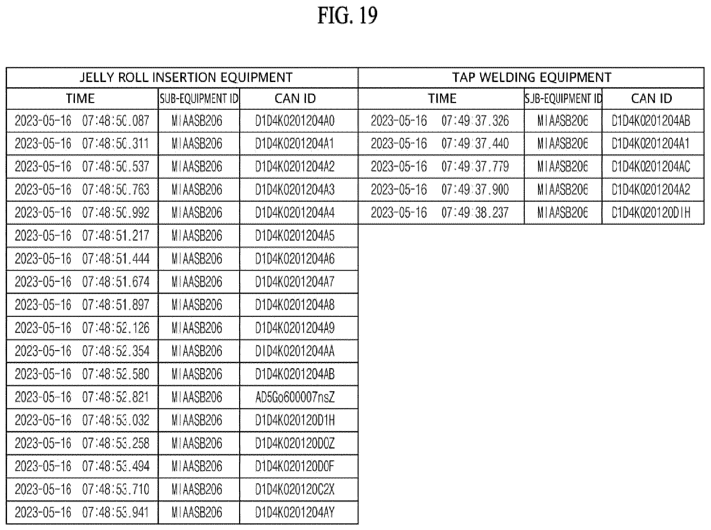

FIG. 19 is a diagram for describing a method of managing cell tracking data according to exemplary embodiments.

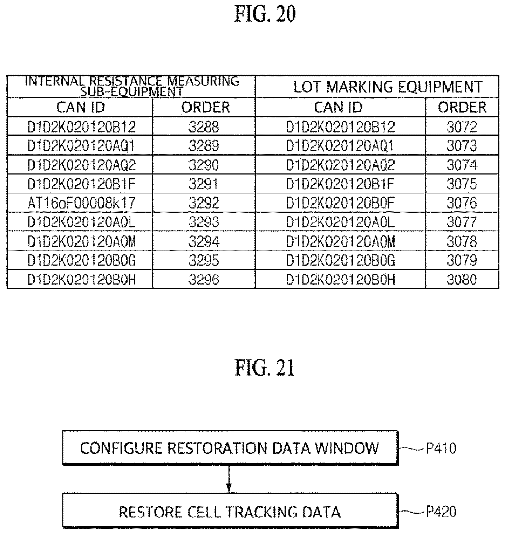

FIG. 20 is a diagram for describing a method of managing cell tracking data according to exemplary embodiments.

Referring to FIGS. 1, 2, and 8, and FIGS. 18 to FIG. 20, a data set for restoration may be configured in step P310. In FIG. 19, in the cell tracking data CTDc of the sub-equipment 110c collected from the controller 113c, the continuity of the can IDs may be less than the intended number. For example, although the sub-equipment 110c is designed to allow seventeen cell cases CC to be in input into the sub-equipment 110c at simultaneously, the number of cell cases CC simultaneously input into the sub-equipment 110c may be different from seventeen cell cases CC. In this case, it is not possible to select a can ID that is to be used for the restoration of the unrecognized can ID among the can IDs subsequent to the unrecognized can ID and the can IDs preceding the unrecognized can ID as described above.

As such, when the unrecognized can ID cannot be restored by the method of FIG. 15, a data set for restoration may be configured in P310. More specifically, in order to restore the unrecognized can ID of the cell tracking data, a restoration data set including the cell tracking data of the current sub-process and the cell tracking data of the adjacent sub-process may be configured.

As an example, the restoration data set for restoring the unrecognized can ID of the cell tracking data collected from the controller 113c may include the cell tracking data CTDc of the sub-equipment 110c (that is, the jelly roll insertion equipment) collected from the controller 113c and the cell tracking data CTDd of the sub-equipment 110c (that is, the tab welding equipment) collected from the controller 113d. The restoration data set for restoring the unrecognized can ID of the cell tracking data CTDc collected from the controller 113c is illustrated in FIG. 19.

For example, since an unrecognized ID 'AD5Go600007nsZ' of the cell tracking data of the equipment 110c is present between a can ID 'D1D4K0201204AB' and a can ID 'D1D4K020120D1H', a portion between the can ID 'D1D4K0201204AB' and the can ID 'D1D4K020120D1H' among the cell tracking data of the sub-equipment 110c (that is, the tap welding equipment) collected from the controller 113d may be included in the restoration data set.

As another example, a restoration data set for restoring an unrecognized can ID of cell tracking data collected from the controller 113n may include the cell tracking data CTDn of the sub-equipment 110n (that is, internal resistance inspection equipment) collected from the controller 113n and the cell tracking data CTDm of the sub-equipment 110m (that is, the lot marking equipment) collected from the controller 113m. The restoration data set for restoring the unrecognized can ID of the cell tracking data CTDn collected from the controller 113n is illustrated in FIG. 19.

Subsequently, the cell tracking data may be restored in step P320. The restoration of the cell tracking data may include restoration of the unrecognized can ID of the cell tracking data CTDc or restoration of the unrecognized can ID of the cell tracking data CTDn collected in step P180.

For example, since the unrecognized ID 'AD5Go600007nsZ' of the cell tracking data CTDc of the equipment 110c is present between the can ID 'D1D4K0201204AB' and the can ID 'D1D4K020120D1H', it may be restored as either 'D1D4K0201204AC' subsequent to the can ID 'D1D4K0201204AB' or 'D1D4K020120D1G' preceding the can ID 'D1D4K020120D1H'. The can ID 'D1D4K0201204AC' is present between the can ID 'D1D4K0201204AB' and the can ID 'D1D4K020120D1H' among the cell tracking data CTDd collected from the sub-equipment 110d (that is, tab welding equipment) by the controller 113d, and is not included in the cell tracking data of the equipment 110c. Accordingly, the unrecognized ID 'AD5Go600007nsZ' of the cell tracking data CTDc of the equipment 110c may be restored as the can ID 'D1D4K0201204AC'.

As another example, a can ID having a preceding order in the cell tracking data CTDn of the equipment 110n (that is, the internal resistance measuring equipment) may be matched to a preceding order in the cell tracking data CTDm of the equipment 110m (that is, the lot ID marking equipment), and a can ID having a subsequent order in the cell tracking data CTDn of the equipment 110n may be matched to a subsequent order in the cell tracking data CTDm of the equipment 110m. That is, even if the order of each can ID in the cell tracking data CTDn of the equipment 110n and the order of each can ID in the cell tracking data CTDm of the equipment 110m do not coincide with each other, the order is maintained.

Since the unrecognized ID 'AT16Of00008k17' of the cell tracking data CTDn of the equipment 110n is present between the can ID 'D1D2K020120B1F' and the can ID 'D1D2K020120AOL', it may be restored as the can ID 'D1D2K020120B0F', which is present between the can ID 'D1D2K020120B1F' and the can ID 'D1D2K020120AOL' among the cell tracking data of the equipment 110m.

FIG. 21 is a flowchart for describing a method of managing cell tracking data according to exemplary embodiments.

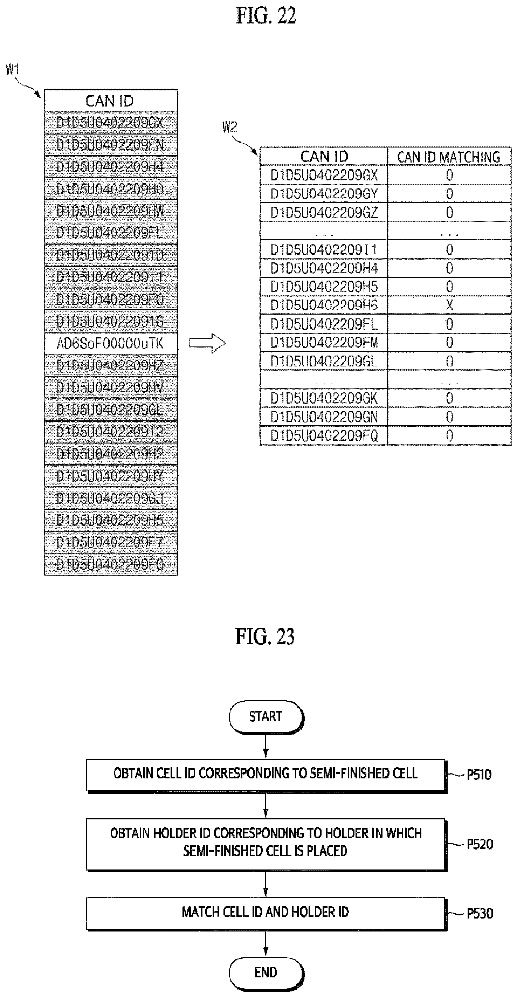

FIG. 22 is a diagram for describing a method of managing cell tracking data according to exemplary embodiments.

Referring to FIGS. 21 and 22, first and second restoration data windows W1 and W2 may be configured in step P410. The first restoration data window W1 may be provided from cell tracking data including an unrecognized can ID.

The method of FIG. 21 may be used when the unrecognized can ID of the cell tracking data cannot be restored based on the restoration data set as in the method of FIG. 18. More specifically, the cell tracking data CTDi of a previous process, such as the process P130, may be used to restore the unrecognized can ID of the cell tracking data CTDn. In this case, the order of the can ID of the cell tracking data CTDn and the order of the cell tracking data CTDi may be different. Accordingly, the configuration of the first and second restoration data windows W1 and W2 centered on the unrecognized can ID is needed.

In the example of FIG. 22, the first restoration data window W1 may be configured based on the unrecognized can ID 'AD6SoF00000uTK'. The first restoration data window W1 may include can IDs that are temporally adjacent to the unrecognized can ID 'AD6SoF00000uTK'. The first restoration data window W1 may include a predefined number of preceding can IDs (for example, ten can IDs) from the unrecognized can ID 'AD6SoF00000uTK'. Additionally or alternatively, the first restoration data window W1 may include a predefined number of subsequent can IDs (for example, ten can IDs) from the unrecognized can ID 'AD6SoF00000uTK'.

From the first restoration data window W1, 'D1DSU0402209GX,' which is the first can ID, and '1D5U0402209FQ', which is the last can ID, of the first restoration data window W1 may be determined. The 'D1DSU0402209GX,' which is the first can ID, and '1D5U0402209FQ', which is the last can ID, of the first restoration data window W1 may be used to configure the second restoration data window W2. The second restoration data window W2 may include a portion between the can ID 'D1D5U0402209GX' and the can ID '1DSU0402209FQ' among the cell tracking data of the equipment 110i collected by the controller 113i.

Subsequently, in step P420, the cell tracking data may be restored. The restoration of the cell tracking data may include matching between each of the can IDs included in the second restoration data window W2 and the can IDs of the cell tracking data from which the first restoration data window W1 is derived. In the example of FIG. 22, among the can IDs of the second restoration data window W2, the can ID 'D1D5U0402209H6' may not match with the can IDs of the cell tracking data from which the first restoration data window W1 is derived. When just a single can ID does not match with the can IDs of the cell tracking data from which the first restoration data window W1 is derived as described above, the unrecognized can ID may be restored with the corresponding can ID. Accordingly, the unrecognized can ID 'AD6SoF00000uTK' of the first window may be restored as 'D1D5U0402209H6'.

Hereinafter, a cell tracking method, which may be carried out by the secondary battery manufacturing system 1000, will be described with reference to FIGS. 23 to 28. More specifically, a method of tracking cells by associating IDs in the secondary battery manufacturing process by the secondary battery manufacturing system 1000 may be described with reference to FIGS. 23 to 28.

FIG. 23 is a flowchart for describing a method of cell tracking according to exemplary embodiments.

Since the method of FIG. 23 may be performed by the secondary battery manufacturing system 1000 of FIG. 2, any description overlapping with the above-described content may be omitted, and the method may be described using the configurations of FIG. 2.

The embodiment illustrated in FIG. 23 is only an embodiment, and the order of operations according to various embodiments of the present disclosure may be different from that illustrated in FIG. 23, and some operations illustrated in FIG. 23 may be omitted, the order between operations may be changed, or operations may be merged.

Referring to FIG. 23, in step P510, the secondary battery manufacturing system 1000 may obtain a cell ID corresponding to a semi-finished cell. According to an embodiment, the secondary battery manufacturing system 1000 may obtain a cell ID based on the cell tracking data CTDa, CTDb, CTDc, CTDd, CTDe, CTDf, CTDg, CTDh, CTDi, CTDj, CTDm, and CTDn.

Here, the semi-finished cell may include various types of semi-finished cells manufactured during the manufacturing process by the secondary battery manufacturing system 1000. For example, in the case of a manufacturing process of a can-type battery, a semi-finished cell may be configured as a jelly roll, which is a structure wound with a positive electrode, a negative electrode, and a separator interposed therebetween, or a can-type battery cell in which a jelly roll is inserted into a cell case. As another example, in the case of a pouch-type battery manufacturing process, a semi-finished cell may be configured as a pouch-type battery cell in which a unit cell composed of at least one electrode of polarity (e.g., a positive electrode and/or a negative electrode) and a separator sheet, a stacked electrode assembly formed by stacking a plurality of unit cells, a foldable electrode assembly formed by folding a plurality of unit cells, or an electrode assembly is inserted into a pouch. In this time, the unit cell may be configured as a mono cell in which the negative electrode and positive electrode are respectively positioned on the outermost sides, a bi-cell in which electrodes of the same polarity are positioned on the outermost sides, or a half cell in which the negative electrode or positive electrode is positioned between the separator sheets on the outermost sides.

In P520, the secondary battery manufacturing system 1000 may obtain a holder ID corresponding to, that is, identifying a holder in which the semi-finished cell is placed. According to an embodiment, the secondary battery manufacturing system 1000 may obtain the holder ID based on the cell tracking data CTDa, CTDb, CTDc, CTDd, CTDe, CTDf, CTDg, CTDh, CTDi, CTDj, CTDm, and CTDn.

The holder may include various types of holders in which the semi-finished cell is placed during the manufacturing process by the secondary battery manufacturing system 1000. For example, in the case of the manufacturing process of the can-type battery, the holder may be configured as the carrier 115a or 115b in which a jelly roll is placed or a cell case into which a jelly roll is inserted. The carrier 115a or 115b may be a structure used to hold the jelly roll in a specific sub-process targeting the jelly roll. The cell case may be, for example, a cylindrical battery case, into which a jelly roll is inserted in a specific sub-process.

As another example, in the case of the manufacturing process of the pouch-type battery, the holder may be a magazine in which unit cells are stacked or a pouch into which unit cells are inserted. The magazine may be a structure or assembly that holds a plurality of unit cells to be stacked or folded by stacking the plurality of unit cells before a stacking process or folding process for forming an electrode assembly by stacking or folding a plurality of unit cells, after a notching process for forming an electrode tab on an electrode sheet of a unit cell and a lamination process for bonding the unit cell to a separator sheet, during the assembly process of the pouch-type battery. A pouch is a configuration of the pouch-type battery case, and may, for example, be a bag structure into which a stack cell or a folding cell is inserted in a packaging process.

In step P530, the secondary battery manufacturing system 1000 may associate the cell ID obtained in P510 and the holder ID obtained in step P520.

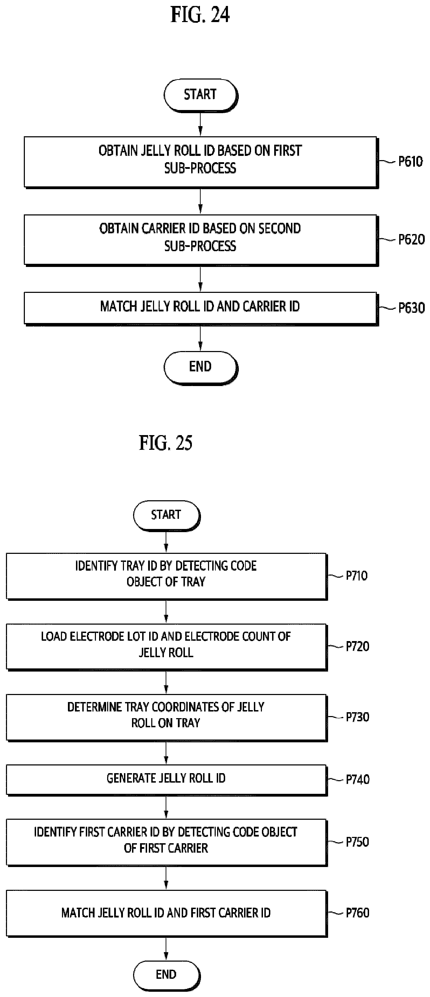

FIGS 24 to 28 which will be described below are flowcharts for describing a method of matching at least two of the jelly roll ID, the carrier ID, and the can ID in each of a plurality of sub-processes included in the can-type battery manufacturing process, by taking a case where the secondary battery manufacturing process performed by the secondary battery manufacturing system 1000 is a can-type battery manufacturing process as an example. However, this is merely an example for convenience of description, and the present invention is not limited to the can-type battery manufacturing process and may also be applied to the pouch-type battery manufacturing process.

FIG. 24 is a flowchart for describing a cell tracking method according to exemplary embodiments.

Since the method of FIG. 24 may be performed by the secondary battery manufacturing system 1000 of FIG. 2, any description overlapping with the content described above may be omitted, and may be described using the configurations of FIG. 2.

The embodiment illustrated in FIG. 24 is just an example, and the order of operations according to various embodiments of the present disclosure may be different from that illustrated in FIG. 24, and some operations illustrated in FIG. 24 may be omitted, the order between operations may be changed, or the operations may be merged.

Referring to FIG. 24, in step P610, the secondary battery manufacturing system 1000 may obtain, e.g., assign, a jelly roll ID corresponding to a jelly roll based on a first cell tracking data acquired in a first sub-process. For example, the first sub-process may be process P30 of FIG. 1 among the manufacturing processes performed by the secondary battery manufacturing system 1000.

In step P620, the secondary battery manufacturing system 1000 may obtain a carrier ID corresponding to a carrier based on second cell tracking data acquired in a second sub-process. Here, the carrier may be a structure that loads the jelly roll having the jelly roll ID obtained in step P610 in the second sub-process. For example, the second sub-process may be process P40 of FIG. 1 among the manufacturing processes performed by the secondary battery manufacturing system 1000.

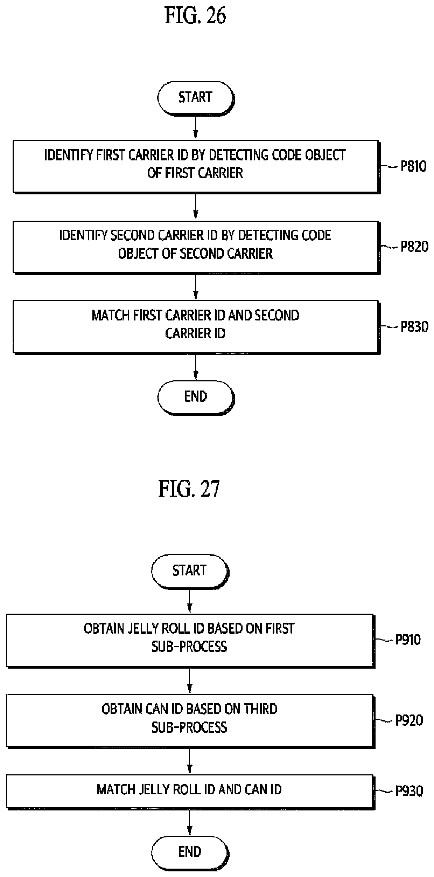

In step P630, the secondary battery manufacturing system 1000 may associate the jelly roll ID obtained in step P610 and the carrier ID obtained in step P620. Step P630, in which the secondary battery manufacturing system 1000 matches or associates the jelly roll ID and the carrier ID, may be described in more detail through FIG. 25 and FIG. 26, which will be described below.

FIG. 25 is a flowchart for describing a method of managing cell tracking data according to exemplary embodiments. More specifically, FIG. 25 is a flowchart for describing a method of managing cell tracking data in the first sub-process described in FIG. 23 performed by the secondary battery manufacturing system 1000.

Since the method of FIG. 25 may be performed by the secondary battery manufacturing system 1000 of FIG. 2, any description overlapping with the content described above may be omitted, and may be described using the configurations of FIG. 2.

The embodiment illustrated in FIG. 25 is merely and example, and the order of operations according to various embodiments of the present disclosure may be different from that illustrated in FIG. 25, and some of the operations illustrated in FIG. 25 may be omitted, the order between the operations may be changed, or the operations may be merged.

Referring to FIG. 25, in step P710, the secondary battery manufacturing system 1000 may identify a tray ID by detecting a code object of a tray onto which the jelly roll is loaded. For example, the code object may be a code image including information about an ID of a target detected and identified by a code reader (for example, matrix readers 111a, 111b, 111c, 111d, 111e, 111f, 111g, 111h, 111i, 111j, 111m, and 111n), and may be implemented as at least one of a data matrix, a QR code, and a barcode. As already discussed above, the code object may be any kind of optically or electronically readable object.

In step P720, the secondary battery manufacturing system 1000 may load an electrode lot ID and electrode count of the jelly roll. Here, the electrode count may indicate the order in which the jelly roll was manufactured in winder equipment.

According to an embodiment, the secondary battery manufacturing system 1000 may load the electrode lot ID and electrode count of the jelly roll with the tray ID identified in step P710 as a trigger. For example, the secondary battery manufacturing system 1000 may load the positive electrode lot ID and the positive electrode count from a server such as a manufacturing execution server (MES). As another example, the secondary battery manufacturing system 1000 may also load the negative electrode lot ID and the negative electrode count from a server such as the MES.

In step P730, the secondary battery manufacturing system 1000 may determine tray coordinates or, generally, a position of the jelly roll on the tray. According to an embodiment, the secondary battery manufacturing system 1000 may determine the tray coordinates (position) of the jelly roll on the tray based on an operation of a pick-and-place machine that moves the jelly roll loaded onto the tray from the tray to the first carrier 115a in the first sub-process. The position of the jelly roll on the tray may be included in the first cell tracking data.

In step P740, the secondary battery manufacturing system 1000 may generate a jelly roll ID that identifies the jelly roll. For example, the jelly roll ID may be a virtual ID generated using data related to the jelly roll, e.g., the first cell tracking data.

According to an embodiment, the secondary battery manufacturing system 1000 may generate the jelly roll ID based on the tray ID identified in step P710. According to an embodiment, the secondary battery manufacturing system 1000 may generate a jelly roll ID based on at least one of the electrode lot ID and electrode count loaded in step P730 and tray coordinates determined in step P730, in addition to the tray ID identified in step P710.

In step P750, the secondary battery manufacturing system 1000 may identify a first carrier ID by detecting the code object of the first carrier 115a onto which the jelly roll is loaded.

In step P760, the secondary battery manufacturing system 1000 may match or associate the jelly roll ID generated in step P740 and the first carrier ID identified in step P750. According to an embodiment, the secondary battery manufacturing system 1000 may associate the jelly roll ID and the first carrier ID by comparing the time at which the jelly roll ID is generated in step P740 and the time at which the first carrier ID is identified in step P750. For example, insofar as an interval between the generation time of the jelly roll ID and the identification time of the first carrier ID is within a predetermined threshold time value, the generated jelly roll ID and the identified first carrier ID may be allowed for the matching or associating. On the other hand, if the interval between the generation time of the jelly roll ID and the identification time of the first carrier ID exceeds the threshold time value, then the jelly roll ID may be matched with another carrier ID whose time interval is less than or equal to the threshold value.

FIG. 26 is a flowchart for describing a method of managing cell tracking data according to exemplary embodiments. More specifically, FIG. 26 is a flowchart for describing a method of managing cell tracking data in the second sub-process described in FIG. 23 performed by the secondary battery manufacturing system 1000.

Since the method of FIG. 26 may be performed by the secondary battery manufacturing system 1000 of FIG. 2, any description overlapping with the content described above may be omitted, and may be described using the configurations of FIG. 2.

The embodiment illustrated in FIG. 26 is merely an example, and the order of operations according to various embodiments of the present disclosure may be different from that illustrated in FIG. 26, and some operations illustrated in FIG. 26 may be omitted, the order between operations may be changed, or operations may be merged.

Referring to FIG. 26, in step P810, the secondary battery manufacturing system 1000 may identify the first carrier ID by detecting the code object of the first carrier 115a. Step P810 described in this embodiment may be a different operation from step P750 of FIG. 25. Specifically, step P750 of FIG. 25 may be an operation of identifying the first carrier ID during the first sub-process, whereas step P810 may be an operation of identifying the first carrier ID during the second sub-process.

In step P820, the secondary battery manufacturing system 1000 may identify a second carrier ID by detecting a code object of the second carrier 115a.

In step P830, the secondary battery manufacturing system 1000 may associate the first carrier ID identified in step P810 and the second carrier ID identified in step P820. According to an embodiment, the secondary battery manufacturing system 1000 may associate the first carrier ID and the second carrier ID by comparing the time at which the first carrier ID is identified in step P810 and the time at which the second carrier ID is identified in step P820. For example, insofar as an interval between the identification times of the first carrier ID and the second carrier ID is within a predetermined threshold time value, the identified first and second carrier IDs may be allowed for the matching or associating. On the other hand, if the interval between the identification times of the first carrier ID and the second carrier ID exceeds the threshold time value, then the first carrier ID may be matched with another carrier ID whose time interval is less than or equal to the threshold value.

According to an embodiment, the secondary battery manufacturing system 1000 may store the jelly roll ID and the first carrier ID as associated with each other in step P760 of FIG. 25. Accordingly, the secondary battery manufacturing system 1000 may associate the jelly roll ID assigned based on the first cell tracking data acquired in the first sub-process and the carrier ID (for example, the second carrier ID) obtained based on the second cell tracking data acquired during the second sub-process as in step P630 of FIG. 24, through the first carrier ID.

FIG. 27 is a flowchart for describing a method of managing cell tracking data according to exemplary embodiments.

Since the method of FIG. 27 may be performed by the secondary battery manufacturing system 1000 of FIG. 2, the description overlapping with the content described above may be omitted, and may be described using the configurations of FIG. 2.

The embodiment illustrated in FIG. 27 is merely an example, and the order of operations according to various embodiments of the present disclosure may be different from that illustrated in FIG. 27, and some operations illustrated in FIG. 27 may be omitted, the order between operations may be changed, or the operations may be merged.

Referring to FIG. 27, in step P910, the secondary battery manufacturing system 1000 may obtain the jelly roll ID corresponding to the jelly roll based on the first sub-process. Step P910 may be the same operation as step P610 of FIG. 24.

In step P920, the secondary battery manufacturing system 1000 may obtain a can ID identifying a cell case into which a jelly roll is inserted in a third sub-process, based on third cell tracking data acquired during the third sub-process. For example, the third sub-process may be process P50 of FIG. 1 among the manufacturing processes performed by the secondary battery manufacturing system 1000.

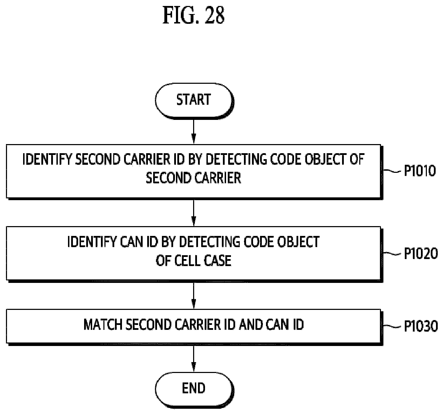

In step P930, the secondary battery manufacturing system 1000 may assign the jelly roll ID obtained in step P910 and the can ID obtained in step P920. Operation of the secondary battery manufacturing system 1000 of associating the jelly roll ID and the can ID in step P930 may be described in more detail through FIG. 28, which will be described below.

FIG. 28 is a flowchart for describing a method of managing cell tracking data according to exemplary embodiments. More specifically, FIG. 28 is a flowchart for describing a method of managing cell tracking data in the third sub-process described in FIG. 27 performed by the secondary battery manufacturing system 100.

Since the method of FIG. 28 may be performed by the secondary battery manufacturing system 1000 of FIG. 2, the description overlapping with the content described above may be omitted, and may be described using the configurations of FIG. 2.

The embodiment illustrated in FIG. 28 is merely an example, and the order of operations according to various embodiments of the present disclosure may be different from that illustrated in FIG. 28, and some operations illustrated in FIG. 28 may be omitted, the order between operations may be changed, or the operations may be merged.

Referring to FIG. 28, in step P1010, the secondary battery manufacturing system 1000 may identify a second carrier ID by detecting a code object of the second carrier 115b. Step P1010 described in this embodiment may be a different operation from step P830 of FIG. 26. Specifically, step P830 of FIG. 26 may be an operation of identifying a second carrier ID during the second sub-process, whereas step P1010 may be an operation of identifying the second carrier ID during the third sub-process.

In step P1020, the secondary battery manufacturing system 1000 may identify a can ID by detecting the code object of the cell case into which the jelly roll is inserted.

In step P1030, the secondary battery manufacturing system 1000 may match the second carrier ID identified in step P1010 and the can ID identified in step P1020. According to an embodiment, the secondary battery manufacturing system 1000 may associate the second carrier ID and the can ID by comparing the time at which the second carrier ID is identified in step P1010 with the time at which the can ID is identified in step P1020. For example, insofar as an interval between the identification time of the second carrier ID and the identification time of the can ID is within a predetermined threshold time value, the identified second carrier ID and can ID may be allowed for the matching or associating. On the other hand, if the interval between the identification time of the second carrier ID and the identification time of the can ID exceeds the threshold time value, then the second carrier ID may be matched with another can ID whose time interval is less than or equal to the threshold value. According to an embodiment, the secondary battery manufacturing system 1000 may store the jelly roll ID and the first carrier ID associated with each other in step P760 of FIG. 25 and may also store the first carrier ID and the second carrier ID associated with each other in step P830 of FIG. 26. Accordingly, the secondary battery manufacturing system 1000 may match the jelly roll ID assigned based on the first cell tracking data on the first sub-process and the can ID obtained based on the third cell tracking data on third sub-process as in step P930 of FIG. 27, through the second carrier ID.

According to the cell tracking method according to exemplary embodiments of the present disclosure, the manufacturing traceability of the secondary battery can be improved.

The effects that can be obtained from the exemplary embodiments of the present disclosure are not limited to the effects mentioned above, and other effects that are not mentioned can be clearly derived and understood by those skilled in the art to which the exemplary embodiments of the present disclosure belong from the following description. That is, unintended effects according to the implementation of the exemplary embodiments of the present disclosure can also be derived by those skilled in the art from the exemplary embodiments of the present disclosure.

Although the secondary battery manufacturing system has been described with reference to the specific embodiments, it is not limited thereto. Therefore, it will be readily understood by those skilled in the art that various modifications and changes can be made thereto without departing from the scope of the present invention defined by the appended claims.

As described above, the present disclosure has been described in more detail through drawings and embodiments. However, the configurations illustrated in the drawings or embodiments described in this specification are just an embodiment of the present disclosure and do not represent all of the technical ideas of the present disclosure, and thus it should be understood that there may be various modifications that may replace them at the time of filing the present application.

## Claims

1. A method for tracking a secondary battery manufacturing process including a plurality of sub-processes involving a respective semi-finished cell, wherein the plurality of sub-processes includes at least one sub-process in which a semi-finished cell is placed in a carrier, the method comprising:
obtaining a cell ID identifying the semi-finished cell;
obtaining a carrier ID identifying the carrier in which the semi-finished cell is placed in a respective sub-process;
associating the cell ID with the carrier ID;
obtaining a can ID corresponding to a cell case or a pouch into which the semi-finished cell is inserted; and
associating the carrier ID with the can ID.

2. The method of claim 1, wherein the cell ID includes a virtual ID reflecting data on the semi-finished cell.

3. The method of claim 1 or 2, wherein
the semi-finished cell is a jelly roll (JR) including a positive electrode (PS), a negative electrode (NS), and a separator (SS) that are wound with the separator (SS) interposed between the positive and the negative electrode (PS, NS),
a first sub-process of the plurality of sub processes is a process of loading the jelly roll (JR) placed on a tray (20) onto a first carrier (115a), and
obtaining the cell ID includes generating a jelly roll ID identifying the jelly roll (JR) in the first sub-process based on a tray ID that identifies the tray (20) detected by reading a code object of the tray (20).

4. The method of claim 3, wherein
generating the jelly roll ID further includes loading, from a database storing an electrode lot ID and an electrode count in association with a respective tray ID, an electrode lot ID and an electrode count of the jelly roll (JR) corresponding to the identification of the tray ID; and
the jelly roll ID is generated further based on the electrode lot ID, the electrode count, and the position of the jelly roll (JR) on the tray (20).

5. The method of any one of the preceding claims, further comprising:
associating roll map data on at least one electrode included in the semi-finished cell with the cell ID,
wherein the roll map data includes data on an electrode manufacturing process in which the electrode included in the semi-finished cell has been manufactured.

6. The method of claim 1 or 2, wherein
during a first sub-process of the plurality of sub-processes, the semi-finished cell is placed on a first carrier (115a) which at least temporarily forms the carrier, and
obtaining the carrier ID includes obtaining a first carrier ID identifying the first carrier (115a).

7. The method of any one of claims 3 to 6, wherein
during a second sub-process of the plurality of sub-processes, the semi-finished cell is placed on a second carrier (115b) which at least temporarily forms the carrier, and
obtaining the carrier ID includes obtaining a second carrier ID identifying the second carrier (115b).

8. The method of claim 7, wherein
the second sub-process is a process of loading the semi-finished cell into the second carrier (115b), and combining the semi-finished cell loaded into the second carrier (115b) with a lower insulator,
obtaining the second carrier ID includes detecting the second carrier ID by reading a code object of the second carrier (115b), and
associating the cell ID with the carrier ID includes associating the cell ID with the second carrier ID.

9. The method of claim 8, wherein
the first sub-process is performed before the second sub-process,
associating the cell ID with the second carrier ID includes associating the cell ID with the first carrier ID and associating the first carrier ID and the second carrier ID.

10. The method of claim 9, further comprising:
identifying the first carrier ID by reading a code object of the first carrier (115a) during the second sub-process;
capturing a first time at which the first carrier ID is identified during the second sub-process; and
capturing a second time at which the second carrier ID is identified during the second sub-process,
wherein, in the step of associating the first carrier ID and the second carrier ID, a time interval between the first and the second time is further associated.

11. The method of any one of the claims 7 to 10, wherein
during a third sub-process of the plurality of processes, the semi-finished cell is inserted into the cell case (CC) or the pouch, and
the second sub-process is performed before the third sub-process.

12. The method of claim 11, wherein
associating the carrier ID with the can ID includes associating the second carrier ID and the can ID.

13. The method of claim 12, further comprising:
identifying the second carrier ID by reading the code object assigned to the second carrier (115b) during the third sub-process;
capturing a third time at which the second carrier ID is identified during the third sub-process; and
capturing a fourth time at which the can ID is identified during the third sub-process,
wherein, in the step of associating the second carrier ID and the can ID, a time interval between the third and the fourth time is further associated.

14. The method of any one of claims 7 to 13, further comprising:
acquiring process data on at least one of the second or the third sub-process; and
associating at least one of the carrier ID or the can ID with the process data of the at least one of the second or the third sub-process.

15. A secondary battery manufacturing system (1000) comprising:
a plurality of sub-facilities configured to perform a respective one of a plurality of sub-processes of a secondary battery manufacturing process,
one or more control units including a memory and a processor, wherein the memory stores program instructions that, when executed by the processor, configure the processor to carry out the method according to any one of the preceding claims while one of the plurality of sub-processes is performed by one of the plurality of sub-facilities.

## Patentansprüche

1. Verfahren zur Nachverfolgung eines Sekundärbatterieherstellungsprozesses, der eine Vielzahl von Teilprozessen unter Einbeziehung einer jeweiligen halbfertigen Zelle umfasst, wobei die Vielzahl von Teilprozessen zumindest einen Teilprozess umfasst, in dem eine halbfertige Zelle in einem Träger platziert wird, wobei das Verfahren Folgendes umfasst:
Erhalten einer Zell-ID, die die halbfertige Zelle identifiziert;
Erhalten einer Träger-ID, die den Träger identifiziert, in dem die halbfertige Zelle in einem jeweiligen Teilprozess platziert wird;
Verknüpfen der Zell-ID mit der Träger-ID;
Erhalten einer Gehäuse-ID, die einem Zellgehäuse oder einem Beutel entspricht, in das beziehungsweise in den die halbfertige Zelle eingesetzt wird; und
Verknüpfen der Träger-ID mit der Gehäuse-ID.

2. Verfahren nach Anspruch 1, wobei die Zell-ID eine virtuelle ID umfasst, die Daten zu der halbfertigen Zelle widerspiegelt.

3. Verfahren nach Anspruch 1 oder 2, wobei
die halbfertige Zelle ein Elektrodenwickel (JR) ist, der eine positive Elektrode (PS), eine negative Elektrode (NS) und einen Separator (SS) umfasst, die mit dem zwischen der positiven und der negativen Elektrode (PS, NS) angeordneten Separator (SS) gewickelt sind,
ein erster Teilprozess der Vielzahl von Teilprozessen ein Prozess des Ladens des auf einem Tablett (20) platzierten Elektrodenwickels (JR) auf einen ersten Träger (115a) ist, und
das Erhalten der Zell-ID das Erzeugen einer den Elektrodenwickel (JR) identifizierenden Elektrodenwickel-ID im ersten Teilprozess auf der Grundlage einer das Tablett (20) identifizierenden Tablett-ID umfasst, die durch Lesen eines Codeobjekts des Tabletts (20) erfasst wird.

4. Verfahren nach Anspruch 3, wobei
das Erzeugen der Elektrodenwickel-ID ferner das Laden einer Elektrodenchargen-ID und einer Elektrodenanzahl des Elektrodenwickels (JR), die der Identifizierung der Tablett-ID entsprechen, aus einer Datenbank umfasst, die eine Elektrodenchargen-ID und eine Elektrodenanzahl in Verknüpfung mit einer jeweiligen Tablett-ID speichert; und
die Elektrodenwickel-ID ferner auf der Grundlage der Elektrodenchargen-ID, der Elektrodenanzahl und der Position des Elektrodenwickels (JR) auf dem Tablett (20) erzeugt wird.

5. Verfahren nach einem der vorhergehenden Ansprüche, ferner umfassend:
Verknüpfen von Rollenkartendaten zu zumindest einer in der halbfertigen Zelle enthaltenen Elektrode mit der Zell-ID,
wobei die Rollenkartendaten Daten zu einem Elektrodenherstellungsprozess umfassen, in dem die in der halbfertigen Zelle enthaltene Elektrode hergestellt worden ist.

6. Verfahren nach Anspruch 1 oder 2, wobei
während eines ersten Teilprozesses der Vielzahl von Teilprozessen die halbfertige Zelle auf einem ersten Träger (115a) platziert wird, der zumindest vorübergehend den Träger bildet, und
das Erhalten der Träger-ID das Erhalten einer ersten Träger-ID umfasst, die den ersten Träger (115a) identifiziert.

7. Verfahren nach einem der Ansprüche 3 bis 6, wobei
während eines zweiten Teilprozesses der Vielzahl von Teilprozessen die halbfertige Zelle auf einem zweiten Träger (115b) platziert wird, der zumindest vorübergehend den Träger bildet, und
das Erhalten der Träger-ID das Erhalten einer zweiten Träger-ID umfasst, die den zweiten Träger (115b) identifiziert.

8. Verfahren nach Anspruch 7, wobei
der zweite Teilprozess ein Prozess des Ladens der halbfertigen Zelle in den zweiten Träger (115b) und des Zusammenfügens der in den zweiten Träger (115b) geladenen halbfertigen Zelle mit einem unteren Isolator ist,
das Erhalten der zweiten Träger-ID das Erfassen der zweiten Träger-ID durch Lesen eines Codeobjekts des zweiten Trägers (115b) umfasst, und
das Verknüpfen der Zell-ID mit der Träger-ID das Verknüpfen der Zell-ID mit der zweiten Träger-ID umfasst.

9. Verfahren nach Anspruch 8, wobei
der erste Teilprozess vor dem zweiten Teilprozess durchgeführt wird,
das Verknüpfen der Zell-ID mit der zweiten Träger-ID das Verknüpfen der Zell-ID mit der ersten Träger-ID und das Verknüpfen der ersten Träger-ID und der zweiten Träger-ID umfasst.

10. Verfahren nach Anspruch 9, ferner umfassend:
Identifizieren der ersten Träger-ID durch Lesen eines Codeobjekts des ersten Trägers (115a) während des zweiten Teilprozesses;
Erfassen eines ersten Zeitpunkts, zu dem die erste Träger-ID während des zweiten Teilprozesses identifiziert wird; und
Erfassen eines zweiten Zeitpunkts, zu dem die zweite Träger-ID während des zweiten Teilprozesses identifiziert wird,
wobei bei dem Schritt des Verknüpfens der ersten Träger-ID und der zweiten Träger-ID ferner ein Zeitintervall zwischen dem ersten und dem zweiten Zeitpunkt verknüpft wird.

11. Verfahren nach einem der Ansprüche 7 bis 10, wobei
während eines dritten Teilprozesses der Vielzahl von Prozessen die halbfertige Zelle in das Zellgehäuse (CC) oder den Beutel eingesetzt wird, und
der zweite Teilprozess vor dem dritten Teilprozess durchgeführt wird.

12. Verfahren nach Anspruch 11, wobei
das Verknüpfen der Träger-ID mit der Gehäuse-ID das Verknüpfen der zweiten Träger-ID und der Gehäuse-ID umfasst.

13. Verfahren nach Anspruch 12, ferner umfassend:
Identifizieren der zweiten Träger-ID durch Lesen des dem zweiten Träger (115b) zugewiesenen Codeobjekts während des dritten Teilprozesses;
Erfassen eines dritten Zeitpunkts, zu dem die zweite Träger-ID während des dritten Teilprozesses identifiziert wird; und
Erfassen eines vierten Zeitpunkts, zu dem die Gehäuse-ID während des dritten Teilprozesses identifiziert wird,
wobei bei dem Schritt des Verknüpfens der zweiten Träger-ID und der Gehäuse-ID ferner ein Zeitintervall zwischen dem dritten und dem vierten Zeitpunkt verknüpft wird.

14. Verfahren nach einem der Ansprüche 7 bis 13, ferner umfassend:
Erfassen von Prozessdaten zu zumindest einem der beiden Teilprozesse, dem zweiten oder dem dritten Teilprozess; und
Verknüpfen zumindest einer der beiden IDs, der Träger-ID oder der Gehäuse-ID, mit den Prozessdaten des zumindest einen der beiden Teilprozesse, des zweiten oder des dritten Teilprozesses.

15. Sekundärbatterieherstellungssystem (1000), umfassend:
eine Vielzahl von Teilanlagen, die dazu eingerichtet sind, jeweils einen aus einer Vielzahl von Teilprozessen eines Sekundärbatterieherstellungsprozesses durchzuführen,
eine oder mehrere Steuereinheiten, die einen Speicher und einen Prozessor umfassen, wobei der Speicher Programmanweisungen speichert, die, wenn sie von dem Prozessor ausgeführt werden, den Prozessor dazu einrichten, das Verfahren nach einem der vorhergehenden Ansprüche auszuführen, während einer der Vielzahl von Teilprozessen durch eine der Vielzahl von Teilanlagen durchgeführt wird.

## Revendications

1. Procédé de suivi d'un processus de fabrication de batterie secondaire comprenant une pluralité de sous-processus impliquant une cellule semi-finie respective, la pluralité de sous-processus comprenant au moins un sous-processus où une cellule semi-finie est placée dans un support, ledit procédé comprenant :
l'obtention d'un ID de cellule identifiant la cellule semi-finie ;
l'obtention d'un ID de support identifiant le support où la cellule semi-finie est placée lors d'un sous-processus respectif ;
l'association de l'ID de cellule à l'ID de support ;
l'obtention d'un ID de boîtier correspondant à un boîtier de cellule ou à une poche dans laquelle la cellule semi-finie est insérée ; et
l'association de l'ID de support à l'ID de boîtier.

2. Procédé selon la revendication 1, où l'ID de cellule comprend un ID virtuel reflétant des données sur la cellule semi-finie.

3. Procédé selon la revendication 1 ou la revendication 2, où
la cellule semi-finie est constituée de feuilles enroulées (JR) comprenant une électrode positive (PS), une électrode négative (NS) et un séparateur (SS) enroulés avec le séparateur (SS) intercalé entre l'électrode positive et l'électrode négative (PS, NS),
un premier sous-processus de la pluralité de sous-processus est un processus consistant à charger les feuilles enroulées (JR) placées sur une plaque (20) sur un premier support (115a), et
l'obtention de l'ID de cellule comprend la génération d'un ID de feuilles enroulées identifiant les feuilles enroulées (JR) lors du premier sous-processus sur la base d'un ID de plaque identifiant la plaque (20) détectée par lecture d'un objet de code de la plaque (20).

4. Procédé selon la revendication 3, où
la génération de l'ID de feuilles enroulées comprend en outre le chargement, à partir d'une base de données stockant un ID de lot d'électrodes et un nombre d'électrodes en association avec un ID de plaque respectif, d'un ID de lot d'électrodes et d'un nombre d'électrodes des feuilles enroulées (JR) correspondant à l'identification de l'ID de plaque ; et
l'ID de feuilles enroulées est en outre généré sur la base de l'ID de lot d'électrodes, du nombre d'électrodes et de la position des feuilles enroulées (JR) sur la plaque (20).

5. Procédé selon l'une des revendications précédentes, comprenant en outre :
l'association de données de carte de rouleau sur au moins une électrode comprise dans la cellule semi-finie à l'ID de cellule,
où les données de carte de rouleau comprennent des données sur un procédé de fabrication d'électrode lors duquel l'électrode comprise dans la cellule semi-finie a été fabriquée.

6. Procédé selon la revendication 1 ou la revendication 2, où
au cours d'un premier sous-processus de la pluralité de sous-processus, la cellule semi-finie est placée sur un premier support (115a) formant au moins temporairement le support, et où l'obtention de l'ID de support comprend l'obtention d'un premier ID de support identifiant le premier support (115a).

7. Procédé selon l'une des revendications 3 à 6, où
au cours d'un deuxième sous-processus de la pluralité de sous-processus, la cellule semi-finie est placée sur un deuxième support (115b) qui forme au moins temporairement le support, et l'obtention de l'ID de support comprend l'obtention d'un deuxième ID de support identifiant la deuxième support (115b).

8. Procédé selon la revendication 7, où
le deuxième sous-processus est un processus de chargement de la cellule semi-finie dans le deuxième support (115b), et de combinaison de la cellule semi-finie chargée dans le deuxième support (115b) avec un isolant inférieur,
l'obtention du deuxième ID de support comprend la détection du deuxième ID de support par lecture d'un objet de code du deuxième support (115b), et
l'association de l'ID de cellule à l'ID de support comprend l'association de l'ID de cellule au deuxième ID de support.

9. Procédé selon la revendication 8, où
le premier sous-processus est effectué avant le deuxième sous-processus,
l'association de l'ID de cellule au deuxième ID de support comprend l'association de l'ID de cellule au premier ID de support et l'association du premier ID de support et du deuxième ID de support.

10. Procédé selon la revendication 9, comprenant en outre :
l'identification du premier ID de support par lecture d'un objet de code du premier support (115a) au cours du deuxième sous-processus ;
la capture d'un premier moment où le premier ID de support est identifié au cours du deuxième sous-processus ; et
la capture d'un deuxième moment où le deuxième ID de support est identifié au cours du deuxième sous-processus,
où, lors de l'étape d'association du premier ID de support et du deuxième ID de support, un intervalle temporel entre le premier et le deuxième moment est également associé.

11. Procédé selon l'une des revendications 7 à 10, où,
pendant un troisième sous-processus de la pluralité de processus, la cellule semi-finie est insérée dans le boîtier de cellule (CC) ou la poche, et
le deuxième sous-processus est effectué avant le troisième sous-processus.

12. Procédé selon la revendication 11, où
l'association de l'ID de support à l'ID de boîtier comprend l'association du deuxième ID de support et de l'ID de boîtier.

13. Procédé selon la revendication 12, comprenant en outre :
l'identification du deuxième ID de support par lecture de l'objet de code attribué au deuxième support (115b) au cours du troisième sous-processus ;
la capture d'un troisième moment où le deuxième ID de support est identifié au cours du troisième sous-processus ; et
la capture d'un quatrième moment où l'identifiant de boîtier est identifié au cours du troisième sous-processus,
où, lors de l'étape d'association du deuxième identifiant de support et de l'identifiant de boîtier, un intervalle temporel entre le troisième et le quatrième temps est également associé.

14. Procédé selon l'une des revendications 7 à 13, comprenant en outre :
l'acquisition de données de processus sur le deuxième et/ou le troisième sous-processus ; et
l'association de l'ID de support et/ou de l'ID de boîtier aux données de processus du deuxième et/ou du troisième sous-processus.

15. Système de fabrication de batterie secondaire (1000), comprenant :
une pluralité de sous-installations prévues pour effectuer un sous-processus respectif parmi une pluralité de sous-processus d'un processus de fabrication de batterie secondaire,
une ou plusieurs unités de commande comprenant une mémoire et un processeur, la mémoire stockant des instructions de programme dont l'exécution par le processeur entraîne la mise en œuvre par ledit processeur du procédé selon l'une des revendications précédentes pendant l'exécution d'un sous-processus de la pluralité de sous-processus par une sous-installation de la pluralité de sous-installations.
